# EUROPÄISCHE PATENTSCHRIFT

(11) **EP 3 167 400 B1**
(45) Veröffentlichungstag und Bekanntmachung des Hinweises auf die Patenterteilung: **02.01.2019**
(21) Anmeldenummer: 15763821.4
(22) Anmeldetag: 13.07.2015
(51) Int. Cl.: G06F 21/62

(54) **VERFAHREN UND VORRICHTUNG ZUM ABSICHERN VON PROZESSEN**
METHOD AND DEVICE FOR MAKING PROCESSES SECURE
PROCÉDÉ ET DISPOSITIF DE SÉCURISATION DE PROCESSUS

(30) Priorität: 11.07.2014 DE 102014109795
(43) Veröffentlichungstag der Anmeldung: 17.05.2017
(73) Patentinhaber: Bundesdruckerei GmbH, 10969 Berlin (DE)
(72) Erfinder: DIETRICH, Frank, 12437 Berlin (DE); KRAUS, Micha, 10827 Berlin (DE)
(74) Vertreter: Bittner, Thomas L.
(86) Internationale Anmeldenummer: PCT/DE2015/100298
(87) Internationale Veröffentlichungsnummer: WO 2016/004928

(56) Entgegenhaltungen:
- US-A1- 2008 184 335
- Ella Deon Ballard: "Red Hat Certificate System 8.1 Deployment, Planning, and Installation", , 31. Dezember 2012 (2012-12-31), XP055226134, Gefunden im Internet: URL:https://access.redhat.com/documentatio n/en-US/Red_Hat_Certificate_System/8.1/pdf /Deploy_and_Install_Guide/Red_Hat_Certific ate_System-8.1-Deploy_and_Install_Guide-en -US.pdf [gefunden am 2015-11-05]
- William Emmanuel Yu: "Why is Trusted Platform Module (TPM) now removable on desktop motherboards? - Quora", , 1. Juli 2014 (2014-07-01), XP055225946, Gefunden im Internet: URL:https://www.quora.com/Why-is-Trusted-P latform-Module-TPM-now-removable-on-deskto p-motherboards [gefunden am 2015-11-04]
- Chris Wright ET AL: "Linux Security Module Framework", , 26. Juni 2002 (2002-06-26), XP055226019, Gefunden im Internet: URL:https://www.kernel.org/doc/ols/2002/ol s2002-pages-604-617.pdf [gefunden am 2015-11-05]
- Anonymous: "LXC - Wikipedia, the free encyclopedia", , 9. Juli 2014 (2014-07-09), XP055226017, Gefunden im Internet: URL:https://en.wikipedia.org/w/index.php?t itle=LXC&oldid=616249186 [gefunden am 2015-11-05]
- Major Hayden: "Launch secure LXC containers on Fedora 20 using SELinux and sVirt - major.io", , 21. April 2014 (2014-04-21), XP055225942, Gefunden im Internet: URL:https://major.io/2014/04/21/launch-sec ure-lxc-containers-on-fedora-20-using-seli nux-and-svirt/ [gefunden am 2015-11-04]

## Beschreibung

Die Erfindung betrifft allgemein Sicherheitsaspekte von Betriebssystemen und der darin ausgeführten Prozesse und insbesondere ein Verfahren und eine Vorrichtung zur abgesicherten Überwachung von Prozessen basierend auf einer Zugriffskontrolle, welche unter Nutzung eines Sicherheitsmoduls erfolgt.

### Hintergrund

Moderne Betriebssysteme erlauben die Ausführung von einer Vielzahl von Prozessen und stellen rudimentäre Mittel zur Verfügung, um die Ausführung der Prozesse zu überwachen. Beispielsweise können Prozesse mit unterschiedlichen Berechtigungen gestartet werden, wodurch Zugriffe auf Ressourcen des Betriebssystems zumindest teilweise eingeschränkt sein können. Da der Aufruf und die Verarbeitung der jeweiligen Prozesse jedoch nicht gänzlich durch das Betriebssystem kontrolliert werden kann, können bei entsprechender Programmierung und entsprechend priorisiertem Aufruf die eingebauten Sicherheitsvorkehrungen umgangen werden, wodurch potentielle Sicherheitslücken und Gefahrenquellen entstehen können.

In vielen Betriebssystemen werden Schnittstellen und Mechanismen zur Verfügung gestellt, um Aufrufe von Prozessen zu überwachen. Beispielsweise stellt "Linux Security Modules" (LSM), das für das Linux-Betriebssystem entwickelt worden ist, ein generisches Framework im Linux-Kernel bereit, für das verschiedene Zugriffskontrollsysteme in Form von Modulen implementiert werden können. Beispiele für Implementierungen sind die Projekte SELinux oder Smack. Hiermit können Zugriffskontrollen auf Ressourcen im Linux-Betriebssystem implementiert werden. Jedoch besteht auch hier eine potentielle Sicherheitslücke darin, dass LSM von einem Nutzer mit entsprechenden Rechten auch so konfiguriert werden kann, dass beispielsweise bei einer fehlerhaften Konfiguration oder durch gezielte Manipulation auch ein vermeintlich abgesichertes System kein ausreichendes Maß an Sicherheit erreicht.

Ein weiterer Ansatz zu Absicherung sowohl des Betriebssystems als auch der darin ausgeführten Prozesse besteht darin, die Ausführung der Prozesse einerseits und das Betriebssystem und die jeweiligen Ressourcen andererseits zu kapseln. Hierbei kommen verschiedene Ansätze zur Isolation und Virtualisierung zum Einsatz, wobei primär das Ziel verfolgt wird, eine Abstraktionsschicht zwischen den Prozessen eines Anwenders und den Systemressourcen vorzusehen. Bekannte Ansätze basieren auf der Ausführung von virtuellen Maschinen, welche durch einen Hypervisor oder Monitor gesteuert werden, wobei in jeder virtuellen Maschine die Hardware zumindest teilweise simuliert und ein eigenständiges Betriebssystem ausgeführt wird. Durch geeignete Kontrollmechanismen unterhalb der virtuellen Maschine kann sichergestellt werden, dass Prozesse und Prozessaufrufe die Grenzen der virtuellen Maschine nicht oder nur mit entsprechenden Berechtigungen überschreiten können. Diese Art der Absicherung von Prozessen kann jedoch berechnungsintensiv sein, da ein eigenständiges Betriebssystem auf simulierter Hardware in der virtuellen Maschine ausgeführt werden muss.

Weniger rechenintensive Ansätze zur Isolation von Prozessen basieren auf der Idee der Betriebssystem-Virtualisierung, gemäß der Prozesse in einzelnen Containern oder Jails, jedoch auf derselben Instanz eines Betriebssystems ausgeführt werden. Derartige Ansätze zur Trennung von Prozessen auf einem gemeinsamen Betriebssystem werden beispielsweise in dem Linux Container Tools (LXC) Projekt oder im Projekt Cells der Columbia University beschrieben. Jedoch stellt sich auch bei diesen Ansätzen das Problem, dass durch eine gezielte Fehl- oder Falschkonfiguration der Container oder Jails Sicherheitslücken entstehen können und somit das System trotz Absicherung nicht das gewünschte Sicherheitsniveau erreicht.

Ferner wird versucht, die Zugriffskontrolle durch eine Kombination von Zugriffskontrollmechanismen und Virtualisierung zu erreichen. So wurden beispielsweise Versuche unternommen, SELinux oder Smack derart einzurichten, dass eine Isolation von mittels LXC erzeugten Containern weiter verbessert werden kann. Jedoch kann auch hierdurch das Problem einer Fehl- oder Falschkonfiguration des Systems durch einen Benutzer nicht zufriedenstellend gelöst werden.

Aus dem Dokument US 2008 / 0184335 A1 sind ein Verfahren und ein System bekannt, die die Linux-Security Module nutzen. Bei dem System ist ein Discretionary Access Control (DAC) vorgesehen. Die SEL Linux-Zugriffskontrolle soll erweitert werden, wofür ein sogenanntes "Trusted Platform Module" vorgeschlagen wird. Hierfür können Smart Cards oder Token zum Einsatz kommen.

Eine Software-Lösung zum Managen von Zertifikaten ist unter dem Namen "Red Hat Certificate System 8.1" bekannt (Ballard: "Red Hat Certificate System 8.1 Deployment, Planning, and Installation", 31 December 2012 (2012-12-31), XP055226134, Gefunden im Internet: URL:https://access.redhat.com/documentation/en-US/Red_Hat_Certificate_System/ 8.1/pdf/Deploy_and_Install_Guide-en-US.pdf [Abruf am 05-11-2015] Seiten71, 111, 181).

In Verbindung mit dem Linux-Softwaresystem sind sogenannte Container bekannt (Anonymous: "LXC - Wikipedia, the free encyclopedia", 9 Juli 2014 (2014-07-09), XP055226017, Gefunden im Internet: URL:https//en.wikipedia.org/w/index.php?title=LXC&oldid=6162 49186 [retrieved on 2015-11-05] the whole document).

Smalley et al. (Chris Wright et al.: "Linux Security Module Framework", 26 Juni 2002 (2002-06-26), XP055223019, Gefunden im Internet: URL:https://www.kernel.org/doc/ols/2002/ols 2002-pages-604-617.pdf [Abruf am 05-11-2015]).

### Zusammenfassung

Aufgabe der Erfindung ist es, ein Verfahren und eine Vorrichtungen zu schaffen, welche eine verbesserte Absicherung von Prozessen bereitstellen.

Die Aufgabe wird durch eine Vorrichtung und ein Verfahren zur abgesicherten Überwachung von Prozessen gelöst, wie sie in den unabhängigen Ansprüchen 1 und 10 definiert sind. Bevorzugte Ausführungsformen sind in den abhängigen Ansprüchen definiert.

Es ist vorgesehen, dass das Zugriffskontrollmodul eingerichtet ist, basierend auf einer oder mehreren Berechtigungen Aufrufe mindestens eines Prozesses (Prozessaufruf) zu überwachen, wobei das Betriebssystem eingerichtet ist, die eine oder mehreren Berechtigungen mittels des Sicherheitsmoduls zu konfigurieren. Eine mittels des hardwareseitigen Sicherheitsmoduls konfigurierte und unter Einbeziehung des oder allein von dem Zugriffskontrollmodul(s) zur Zugriffskontrolle angewandte Berechtigung kann eine Zugriffskontrolle hinsichtlich einer oder mehrerer Hardware-Ressourcen und eine Zugriffskontrolle hinsichtlich eines oder mehrerer Prozessaufrufe betreffen.

Das Betriebssystem kann auch eine Komponente für eine benutzerbestimmbare Zugriffskontrolle oder Discretionary Access Control (DAC) umfassen, welche Prozessaufrufe anhand ihrer Prozessidentifikation (Prozess-ID oder pid) identifiziert und hieraus ermittelt, beispielsweise durch Nachschlagen in einer Tabelle, ob der Aufruf blockiert oder freigegeben werden soll. Das Zugriffskontrollmodul kann Aufrufe bzw. Zugriffe basierend auf einer dem Aufruf / Zugriff zugeordneten Prozess-ID überwachen. Ferner kann das Zugriffskontrollmodul ein frei konfigurierbares Modul im Sinne der Mandatory Access Control (MAC) sein, wie es in zahlreichen Betriebssystemen zu finden ist, beispielsweise im Windows-Betriebssystem von der Microsoft Corporation, im Linux-Betriebssystem und seinen Derivaten, wie z.B. Android, oder in UNIX-Systemen. Für MAC existieren verschiedene Konzepte als solche, die daher nicht näher zu erläutern sind und welche hier wahlweise Anwendung finden können. Sie können auf sogenannten Multi-Level-Sicherheitssysteme oder multilateralen Sicherheitsmodellen basieren.

Das Zugriffskontrollmodul, beispielsweise das MAC-basierte Zugriffskontrollmodul, kann über eine Kontrolle der Prozess-ID hinaus die Ressourcen- und / oder Prozessaufrufe anhand ihrer Parameter identifizieren und basierend auf einem Satz von einer oder mehreren Berechtigungen oder Policies den Aufruf / Zugriff überwachen oder kontrollieren. Vorzugsweise ist das Zugriffskontrollmodul eingerichtet, einen Aufruf / Zugriff zu blockieren, wenn eine oder mehrere Bedingungen nicht erfüllt sind, und den Aufruf / Zugriff freizugeben, wenn eine oder mehrere Bedingungen erfüllt sind.

Die Vorrichtung weist ferner eine Schnittstelle auf, welche eine Kopplung eines Sicherheitsmoduls ermöglicht. Die Vorrichtung kann mit einem gekoppelten Sicherheitsmodul kommunizieren, wobei sie Daten oder Informationen an das Sicherheitsmodul senden und / oder Daten oder Informationen von dem Sicherheitsmodul empfangen kann. Die Vorrichtung kann von dem gekoppelten Sicherheitsmodul Informationen oder Daten empfangen, welche die Berechtigungen des Zugriffskontrollmoduls identifizieren oder darstellen. Entsprechend kann das Betriebssystem der Vorrichtung eingerichtet sein, anhand dieser von dem Sicherheitsmodul empfangenen Informationen oder Daten die eine oder mehreren Berechtigungen zu konfigurieren. Vorzugsweise erlaubt das Betriebssystem keinen weiteren Zugriff, beispielsweise durch einen Benutzer, auf die Berechtigungen und ihre Konfiguration.

Die Vorrichtung erlaubt eine gezielte Kontrolle von Prozess- und / oder Ressourcenaufrufen durch das Zugriffskontrollmodul im Betriebssystem, wobei die jeweiligen Berechtigungen über ein gekoppeltes Sicherheitsmodul konfiguriert werden. Hierdurch wird die Gefahr einer Falsch- oder Fehlkonfiguration durch einen Benutzer gänzlich verhindert, da die Berechtigungen nur über ein gekoppeltes Sicherheitsmodul konfiguriert werden können. Ein Benutzer, der nicht im Besitz eines Sicherheitsmoduls ist, kann somit keine Konfiguration der Berechtigungen anstoßen. Aber auch ein Benutzer, der im Besitz eines Sicherheitsmoduls ist, kann keine über die durch das Sicherheitsmodul verursachte Konfiguration der Berechtigungen vornehmen. Hierdurch wird die Sicherheit der Vorrichtung deutlich erhöht, da gewährleistet ist, dass die Vorrichtung nur für den durch das Sicherheitsmodul konfigurierten Zweck oder eine entsprechende Nutzung verwendet werden kann.

Gemäß einem weiteren Aspekt ist ein System bereitgestellt, das mindestens eine solche Vorrichtung umfasst. Das System kann mindestens eine Instanz eines vertrauenswürdigen Dritten umfassen, die beispielweise eine Public Key-Infrastruktur bereitstellt. Auch andere Technologien, die eine beispielsweise eine symmetrische Schlüsselkonfiguration bereitstellen, können zum Einsatz kommen. Die Vorrichtungen des Systems können eingerichtet sein, eine Verbindung zu der Instanz des vertrauenswürdigen Dritten aufzubauen, um sicherheitsrelevante Daten zu kommunizieren und zu erhalten, beispielsweise Schlüssel, Zertifikate, Identitäten und Ähnliches. Die Instanz des vertrauenswürdigen Dritten kann ferner die Sicherheitsmodule zum Ankoppeln an die Vorrichtung konfigurieren und ausgeben, um einen abgesicherten Betrieb der Vorrichtungen zu ermöglichen. Beispielsweise können die Sicherheitsmodule derart konfiguriert sein, dass sie, wenn sie an die Schnittstelle der Vorrichtung gekoppelt sind, die Vorrichtung derart konfigurieren, dass sie eine Verbindung zu der Instanz des vertrauenswürdigen Dritten aufbaut, um eine Konfiguration der Berechtigungen des Zugriffskontrollmoduls zu ermöglichen.

Gemäß einem weiteren Aspekt ist ferner ein Verfahren zur abgesicherten Überwachung von Prozessen bereitgesellt, das ein Ausführen eines Betriebssystems und mindestens eines Prozesses auf dem Betriebssystem unter Zugriff auf mindestens eine Hardware-Ressource, ein Bestimmen, ob ein Sicherheitsmodul angekoppelt ist, ein Überwachen eines Zugriffs auf die mindestens eine Hardware-Ressource durch den mindestens einen Prozess und / oder Aufrufen des mindestens einen Prozesses basierend auf einer oder mehreren Berechtigungen durch ein Zugriffskontrollmodul des Betriebssystems, und ein Konfigurieren der einen oder der mehreren Berechtigungen mittels des Sicherheitsmoduls umfasst. Vorzugsweise umfasst das Verfahren ein Blockieren eines Ressourcenzugriffs und / oder eines Prozessaufrufs, wenn eine oder mehrere Bedingungen nicht erfüllt werden, und ein Freigeben des Ressourcenzugriffs und / oder des Prozessaufrufs, wenn eine oder mehrere Bedingungen erfüllt werden. Durch das Verfahren wird eine abgesicherte Zugriffskontrolle für die Nutzung von Hardwarekomponenten und / oder Prozesse bereitgestellt, welche über das Sicherheitsmodul flexibel konfigurierbar und sicher gestaltet ist.

In einer Ausführungsform werden die eine oder die mehreren Berechtigungen konfiguriert, indem das Betriebssystem die eine oder die mehreren Berechtigungen über das Sicherheitsmodul freischaltet. Das Zugriffskontrollmodul kann beispielsweise initial restriktiv eingerichtet sein und bei der Überwachung keinen Aufruf oder lediglich ausgewählte Aufrufe von Prozessen und / oder Hardware-Ressourcen erlauben. Hierdurch kann ein rudimentärer Betrieb des Betriebssystems oder der Vorrichtung bereitgestellt werden, beispielsweise um eine Anmeldung eines Benutzers oder Kopplung eines Sicherheitsmoduls zu ermöglichen oder anzustoßen. Weitergehende Funktionen des Betriebssystems und insbesondere die Ausführung von Prozessen und / oder der Zugriff auf Hardware-Ressourcen können jedoch gänzlich oder stark eingeschränkt sein. Das Zugriffskontrollmodul des Betriebssystems kann ferner mit einer oder mehreren Berechtigungen vorkonfiguriert sein, welche jedoch inaktiv, gesperrt oder verschlüsselt sein können. Sobald das Sicherheitsmodul an die Schnittstelle koppelt, kann das Betriebssystem das Sicherheitsmodul abfragen und beispielsweise eine Identifikation zur Aktivierung von Berechtigungen oder einen Schlüssel zur Entschlüsselung von Berechtigungen vom Sicherheitsmodul erhalten, um entsprechende Berechtigungen freizuschalten und das Zugriffskontrollmodul entsprechend zu konfigurieren. Hierdurch wird ermöglicht, dass die Vorrichtung vorkonfiguriert werden kann, jedoch nur über ein passendes oder geeignetes Sicherheitsmodul in ihrer vollen Funktionalität freigeschaltet werden kann.

Es kann vorgesehen sein, die eine oder die mehreren Berechtigungen zu konfigurieren, indem das Betriebssystem die eine oder die mehreren Berechtigungen basierend auf Informationen des Sicherheitsmoduls lädt. Sobald ein Sicherheitsmodul an die Schnittstelle koppelt, kann das Betriebssystem beispielsweise die Informationen von dem Sicherheitsmodul abfragen und auswerten. Die Informationen können eine Angabe zu einer Quelle für Berechtigungen für das Zugriffskontrollmodul aufweisen und das Betriebssystem kann eine Verbindung zu der Quelle aufbauen, um mindestens eine Berechtigung abzurufen, welche dann für die Zugriffskontrolle und die Überwachung der Aufrufe und / oder der Zugriffe konfiguriert wird. Das Betriebssystem kann ferner vorkonfigurierte Informationen umfassen, welche in einer abgesicherten Form die Angabe der Quelle aufweisen, und das Betriebssystem kann die Informationen von dem Sicherheitsmodul verwenden, um die Angabe der Quelle aus den abgesicherten Informationen zu gewinnen. Die Quelle kann lokal oder entfernt angeordnet sein, beispielsweise kann die Quelle eine vertrauenswürdige Instanz in einem Netzwerk oder ein der Vorrichtung zugeordneter lokaler oder entfernter Speicher sein, der von dem Betriebssystem direkt abgefragt werden kann. Die Quelle kann sich jedoch auch direkt auf dem Sicherheitsmodul befinden, beispielsweise in einem abgesicherten Speicher des Sicherheitsmoduls, wobei das Sicherheitsmodul nach einer initialen Abfrage durch das Betriebssystem den Zugang zu dem abgesicherten Speicher freischalten kann, so dass das Betriebssystem den abgesicherten Speicher zum Laden der Berechtigungen nutzen kann.

Das Sicherheitsmodul kann eingerichtet sein, eine Verbindung mit einem vertrauenswürdigen Dritten herzustellen, um mindestens eine der Berechtigungen zu erlangen. Durch den vertrauenswürdigen Dritten kann ferner eine Public Key-Infrastruktur bereitgestellt sein. Beispielsweise kann der vertrauenswürdige Dritte ein Trust Center sein.

Somit können von dem Sicherheitsmodul über die Schnittstelle direkt die eine oder die mehreren Berechtigungen empfangen und im Zugriffskontrollmodul gesetzt, erweitert und / oder aktualisiert werden. Ferner kann die Vorrichtung ebenfalls über die Schnittstelle von dem Sicherheitsmodul Sicherheitsinformation oder Schlüssel empfangen, um inaktive Berechtigungen freizuschalten oder zu entschlüsseln und / oder um eine abgesicherte Kommunikation zu einer weiteren Quelle aufzubauen, welche die Berechtigungen bereitstellt.

Die eine oder die mehreren Berechtigungen können dynamisch zur Laufzeit konfiguriert werden. Das Zugriffskontrollmodul des Betriebssystems kann beispielsweise anhand eines Sicherheitsmoduls konfiguriert sein. Sobald das Sicherheitsmodul entfernt wird und / oder ein weiteres Sicherheitsmodul an die Schnittstelle koppelt, kann das Betriebssystem das weitere Sicherheitsmodul verwenden, um die Berechtigungen zu konfigurieren. Vorzugsweise wird, sobald ein gekoppeltes Sicherheitsmodul entfernt wird, das Betriebssystem die Berechtigungen in einen initialen und / oder restriktiven Zustand zurücksetzen und erst nach einer erneuten Kopplung desselben oder eines weiteren Sicherheitsmoduls die Berechtigungen mittels des erneut gekoppelten Sicherheitsmoduls dynamisch zur Laufzeit konfigurieren. Hierbei muss die Ausführung laufender Prozesse nicht unterbrochen werden. Vielmehr können die Prozesse und / oder der Benutzer über das Entkoppeln des Sicherheitsmoduls geeignet informiert werden und es kann sofort oder innerhalb einer vorgegebenen Zeit die Berechtigung des Zugriffskontrollmoduls in den initialen und / oder restriktiven Zustand versetzt werden, wodurch entsprechend alle oder die Mehrzahl der Aufrufe der laufenden Prozesse geblockt werden. Das Betriebssystem kann jedoch auch die Ausführung der Prozesse an ein gekoppeltes Sicherheitsmodul binden, so dass beim Entfernen des Sicherheitsmoduls die Prozesse entweder beendet werden oder in einen inaktiven Modus oder einen Schlafzustand versetzt werden, wobei die aktuellen Daten und der Zustand der Prozesse zum Unterbrechungszeitpunkt beispielsweise über ein Speicherabbild gesichert werden können. Sobald das Sicherheitsmodul wieder gekoppelt ist, kann das gesicherte Speicherabbild verwendet werden, um den Speicher neu zu konfigurieren und die Prozesse in den Zustand zum Unterbrechungszeitpunkt zu versetzten und die Ausführung wieder zu starten. Hierdurch können schnell initialisierbare und wechselbare Umgebungen für einen oder mehrere Benutzer in Abhängigkeit von entsprechenden Sicherheitsmodulen bereitgestellt werden.

Die Vorrichtung kann eine Benutzerschnittstelle aufweisen, welche zur Authentifizierung eines Benutzers durch das Sicherheitsmodul eingerichtet ist, wobei die eine oder die mehreren Berechtigungen nach einer erfolgreichen Authentifizierung des Benutzers konfiguriert werden. Nach einem Start des Betriebssystems, kann sich die Vorrichtung in einem initialen Zustand befinden, welcher eine Authentifizierung eines Benutzers ermöglicht. Der Benutzer kann ein personalisiertes Sicherheitsmodul an die Vorrichtung koppeln und sich durch Eingabe von Benutzerdaten oder durch andere geeignete Identifikationsmerkmale, beispielsweise Fingerabdruck, Iris-Scan und ähnliche, über das Betriebssystem bei dem Sicherheitsmodul authentifizieren. Beispielsweise kann das Betriebssystem dem Benutzer eine graphische Benutzeroberfläche zur Verfügung stellen, welche der Benutzer zur Eingabe der Benutzerdaten oder Identifikationsmerkmale verwenden kann. Das Betriebssystem kann diese Daten verwenden, um in geeigneter Weise gegenüber dem Sicherheitsmodul den Besitz dieser Daten nachzuweisen, beispielsweise durch direkte Übertragung der Daten an das Sicherheitsmodul oder durch geeignete Challenge-Response oder Zero-Knowledge-Verfahren. Nach erfolgreicher Authentifizierung des Benutzers beim Sicherheitsmodul kann das Sicherheitsmodul die zur Konfiguration erforderlichen Informationen und Daten an das Betriebssystem übertragen, um die Berechtigungen der Zugriffskontrolle zu konfigurieren.

Es kann vorgesehen sein, dass das Zugriffskontrollmodul eingerichtet ist, Ressourcen-Zugriffe und / oder Aufrufe von Prozessen zu klassifizieren und, als Reaktion auf eine Klassifizierung eines Zugriffs / Aufrufs als kritischer Zugriff / Aufruf, bei der Überwachung des Zugriffs / Aufrufs auf das Sicherheitsmodul zuzugreifen. Über die Informationen zur Konfiguration der Berechtigungen hinaus kann das Sicherheitsmodul weitere Informationen oder Daten bereitstellen, welche eine Klassifizierung der Zugriffe / Aufrufe festlegen. Eine solche Klassifizierung kann beispielsweise nach der Art des Zugriffs / Aufrufs, der Identität des aufrufenden Prozesses, der Art der Ressource, auf die ein Aufruf zugreift, und weiteren geeigneten Parametern klassifiziert sein, welche aus dem Prozessaufruf extrahiert werden können. Beispielsweise können Systemaufrufe, welche auf eine gemeinsam genutzte Hardware-Ressource zugreifen, als kritisch eingestuft sein. Die Informationen oder Daten zur Klassifizierung können ferner auch in Form von Berechtigungen bereitgestellt sein, welche nicht nur eine Entscheidung ermöglichen, ob ein Zugriff / Aufruf freigegeben oder blockiert werden soll, sondern ferner funktionale Daten und Anweisungen enthalten können, die das Zugriffskontrollmodul ausführen soll, wenn ein bestimmter Zugriff / Aufruf erkannt worden ist. Bei einer Klassifizierung eines Zugriffs / Aufrufs als kritisch, kann das Zugriffskontrollmodul Informationen über den Zugriff / Aufruf, beispielsweise die Prozess-ID, Parameter, und zusätzliche Informationen zu den Parametern an das Sicherheitsmodul senden, welches dann eine gezielte Überprüfung des kritischen Zugriffs / Aufrufs vornehmen und das Ergebnis der Überprüfung an das Zugriffskontrollmodul kommunizieren kann. Hierdurch wird eine abgestufte Überprüfung von Zugriffen und / oder Aufrufen, umfassend eine Überprüfung durch das Zugriffskontrollmodul basierend auf konfigurierten Berechtigungen und, bei kritischer Einstufung, zusätzlich eine Überprüfung durch das Sicherheitsmodul selbst zur Verfügung gestellt, wodurch eine noch flexibler konfigurierbare abgesicherte Zugriffskontrolle bereitgestellt wird.

Das Zugriffskontrollmodul kann in einem Kernel des Betriebssystems angeordnet sein. Das Zugriffskontrollmodul kann ein fester Bestandteil des Betriebssystem-Kernels sein und kann eine Schnittstelle zur Verfügung stellen, um Informationen über aktuelle Aufrufe bereitzustellen und im Gegenzug Daten über Freigabe oder Blockierung des Aufrufs zu empfangen. Bei-Beispielsweise kann das Zugriffskontrollmodul als MAC-Komponente des Betriebssystems oder als ein Modul für eine LSM-Schnittstelle bereitgestellt sein. Die vorliegenden Technologien sind jedoch nicht auf Linux als Betriebssystem oder eine modifizierte Version von Linux, beispielsweise Android, als Betriebssystem beschränkt. Vielmehr können beliebige Betriebssysteme eingesetzt werden, welche eine Schnittstelle zur Überwachung von Prozessaufrufen bereitstellen. Vorzugsweise sind die durch das Zugriffskontrollmodul überwachten Aufrufe Systemaufrufe. In vergleichbarer Weise kann alternativ oder ergänzend der Umgang mit dem oder den Ressourcenzugriffen erfolgen.

Jeder Prozess wird in einem oder mehreren Containern ausgeführt und diesem zugeordnet, derart, dass jeder Container die zugeordneten Prozesse isoliert. Der Begriff Container, wie er hier verwendet wird, definiert ein software-basiertes Konstrukt oder Modul, welches auf einem Betriebssystem-Kernel aufsetzt und die darin ausgeführten Prozesse oder Anwendungen verwaltet. Container können insbesondere dazu verwendet werden, um Prozesse oder Anwendungen zu isolieren, so dass der Zugriff der Prozesse auf Ressourcen des Betriebssystems oder der Vorrichtung und auf andere Prozesse innerhalb des Betriebssystems oder innerhalb anderer Container überwacht und gegebenenfalls beschränkt werden kann. Hierzu können Container insbesondere Namensräume, beispielsweise namespaces des Linux-Betriebssystems, für jeweilige Ressourcen des Betriebssystems und der Vorrichtung; Beschränkungen, beispielsweise cgroups des Linux-Betriebssystem; und / oder andere Betriebssystemmittel oder Kontrollmöglichkeiten verwenden, um eine kontrollierte Umgebung für die Prozesse und Anwendungen in den einzelnen Containern bereitzustellen. Darüber hinaus kann das Zugriffskontrollmodul bei der Überwachung einzelner Aufrufe der Prozesse die den Containern zugeordneten Informationen nutzen, um so gezielt Zugriffe zu überwachen. Beispielsweise kann durch Setzen von Fähigkeiten oder Capabilities, die dem jeweiligen Container zugeordnet sind, die Privilegierung und Funktionalität der zugeordneten Prozesse angepasst werden. Je nach eingesetztem Betriebssystem können diese oder ähnliche Parameter für jeden Container individuell konfiguriert werden, um unterschiedliche Container mit unterschiedlichen Privilegierungsstufen und unterschiedlichen Zugriffsberechtigungen bereitzustellen. Es sollte jedoch auch klar sein, dass mehrere Container ebenfalls gleich konfiguriert sein können.

Die Prozesse können in einem Container isoliert sein, indem das Zugriffskontrollmodul Aufrufe überwacht. Vorzugsweise weist dies ein Überwachen von Zugriffen auf geteilte Ressourcen und von Kommunikationen von Prozessen zwischen unterschiedlichen Containern auf. In Verbindung mit der Hardware-Ressourcen-Zugriffskontrolle kann vorgesehen sein, dass anhand der mittels des Sicherheitsmoduls konfigurierten Berechtigungen der Zugriff auf Hardware-Ressourcen in Abhängigkeit vom Container bestimmt wird, welchem der Prozess zugeordnet ist, der zugreifen möchte. Zum Beispiel können eine erste und eine zweite Hardware-Ressource (beispielweise Prozessor und Speicher) zur Ausführung von Prozessen bestimmt sein, die einem ersten Container zugeordnet sind, wohingegen eine dritte Hardware-Ressource, zum Beispiel ein weiterer Prozessor, Prozessen aus einem zweiten Container vorbehalten ist.

Alternativ oder ergänzend kann mit Hilfe der mittels des Sicherheitsmoduls konfigurierten Berechtigungen eine Priorisierung von Zugriffen auf eine Hardware-Ressource bestimmt werden, vorzugsweise in Abhängigkeit von einer Containerzugehörigkeit. So kann ein erster Container beim Ressourcenzugriff bevorzugt behandelt werden im Vergleich zu einem zweiten Container. Hierbei kann vorgesehen sein, dass zunächst alle Prozesse aus dem ersten Container einen Zugriff auf die Hardware-Ressource(n) erhalten und danach die Prozesse aus dem zweiten Container. Bei diesen oder anderen Ausgestaltungen kann zum Beispiel zwischen privaten und geschäftlichen Containern eines Nutzers unterschieden werden.

In einer weiteren Ausführungsform kann das Zugriffskontrollmodul auf Gruppen von Berechtigungen zugreifen, wobei jede Gruppe von Berechtigungen einem Container zugeordnet ist. Hierdurch kann eine besonders feingranulare Isolation von Prozessen in Containern erreicht werden, wobei die Zugriffe der Prozesse auf Ressourcen des Betriebssystems und der Vorrichtung überwacht und hierdurch kontrolliert werden. Vorzugsweise können mehrere Container auf einem Linux-Kernel, beispielsweise mehrere LXC-basierte Container, und das Zugriffskontrollmodul als ein Modul für die LSM-Schnittstelle eingerichtet sein. Das Zugriffskontrollmodul kann bei Aufrufen eine Container-Identifikation überwachen und so beispielsweise Zugriffe auf geteilte Ressourcen und Kommunikation zwischen Containern kontrollieren und ggf. einschränken. Die Container können in jeweiligen Gruppen unterschiedliche Berechtigungen für das Zugriffskontrollmodul haben, wobei anhand der Container-Identifikation unterschiedliche Berechtigungen bei der Überwachung herangezogen werden können. Durch die Umsetzung der Isolation von Prozessen in einzelnen Containern über eine im Kernel verankerten Zugriffskontrolle, welche durch ein Sicherheitsmodul geschützt ist, wird eine besonders sichere und zuverlässige Kontrolle der Prozesse erreicht. Der Ansatz ist ferner ressourcenschonend, da die Container auf einem gemeinsamen Betriebssystem-Kernel aufsetzen.

Vorzugsweise können die Gruppen oder einzelne Gruppen von Berechtigungen über entsprechende Sicherheitsmodule geladen und / oder freigeschaltet sein. Hierdurch können einzelne Sicherheitsmodule über das Setzen von Berechtigungen des Zugriffskontrollmoduls einzelne Container freischalten oder konfigurieren. Ferner können einzelne Sicherheitsmodule ebenfalls derart konfiguriert sein, dass sie über entsprechende Berechtigungen einen Zustand für alle Container freischalten, der einem bestimmten initialen Sicherheitsniveau entspricht, so dass die derart freigeschalteten Container und die darin ausgeführten Prozesse oder Anwendungen betriebsfähig sind, jedoch Einschränkungen unterliegen. Erst bei Einsatz eines dedizierten Sicherheitsmoduls kann die Funktionalität des entsprechenden Containers vollständig freigeschaltet werden.

Die Schnittstelle kann an mehrere Module koppeln, die jeweils eine container-spezifischen Konfiguration bereitstellen, wobei sich die container-spezifischen Konfigurationen unterscheiden und jeweils einem der Container zugeordnet sind.

Jeder Container kann eingerichtet sein, Daten der zugeordneten Prozesse persistent zu speichern. Der Container kann eine Verwaltungskomponente umfassen, die die darin ausgeführten Prozesse verwaltet und ebenfalls in der Lage sein kann, den aktuellen Zustand der Prozesse, den verwendeten Speicher und den Zustand der verwendeten Ressourcen abzubilden. Das Betriebssystem kann ferner einen dedizierten Container als Verwaltungskomponente für alle Container ausführen, der die Verwaltung der weiteren Container übernehmen kann. Jeder Container kann sich in einem aktiven Zustand befinden, bei dem die Prozesse in dem Container ablaufen und ein Benutzer mit den Prozessen interagieren kann. Ein Container kann sich ebenfalls in einem inaktiven Zustand oder einem Schlafmodus befinden, bei dem die Prozesse angehalten sind. Bei Eintritt in den inaktiven Zustand oder den Schlafmodus kann die Verwaltungskomponente den aktuellen Zustand der Prozesse abfragen und als Speicherabbild sichern. Das Speicherabbild kann in einem dem Container zugeordneten Speicher persistent abgelegt und der Container in den inaktiven Zustand oder den Schlafmodus versetzt werden.

Die Verwaltungskomponente kann im inaktiven Zustand weiterhin betriebsfähig sein und auf Befehle des Betriebssystems reagieren. Im Schlafmodus kann ebenfalls die Verwaltungskomponente und insgesamt der Container deaktiviert werden. Beim Wiedereintritt in den aktiven Zustand, kann das Betriebssystem den Container initialisieren, die Verwaltungskomponente starten, welche dann das Speicherabbild laden, die einzelnen Prozesse gemäß den gespeicherten Daten und den zugeordneten Speicher initialisieren kann. Die Verwaltungskomponente kann ferner versuchen, einen Zustand der Ressourcen gemäß dem Speicherabbild wiederherzustellen, sofern dies möglich ist. In einem Konfliktfall kann dies geeignet durch die einzelnen Prozesse behandelt und aufgelöst werden. Beispielsweise kann ein Prozess im Konfliktfall neu gestartet oder initialisiert werden.

Jeder Container kann verschlüsselt und über das Sicherheitsmodul entschlüsselbar sein. Vorzugsweise ist das Speicherabbild des Containers verschlüsselt, so dass beim Starten des Containers oder bei Eintritt in den aktiven Zustand des Containers die Verwaltungskomponente das verschlüsselte Speicherabbild an das Betriebssystem und / oder an ein gekoppeltes Sicherheitsmodul übergeben kann, um eine entschlüsselte Version des Containers zu erhalten, die dann zur Initialisierung der darin ausgeführten Prozesse und des zugehörigen Speichers verwendet werden kann. Alternativ kann die Verwaltungskomponente feststellen, dass das Speicherabbild des Containers verschlüsselt ist und kann beim Betriebssystem und / oder bei dem gekoppelten Sicherheitsmodul einen Schlüssel zur Entschlüsselung des Speicherabbilds anfordern.

Es kann vorgesehen sein, dass das Sicherheitsmodul einen Verschlüsselungsbaustein aufweist. Der Verschlüsselungsbaustein kann sowohl symmetrische als auch asymmetrische Verschlüsselungsverfahren unterstützen und kann bei entsprechender Autorisierung auf Schlüssel, Zertifikate und / oder Identitäten zugreifen, welche auf dem Sicherheitsmodul selbst gespeichert sind. Das Sicherheitsmodul kann ferner eine Kommunikationsschnittstelle zum Verschlüsselungsbaustein umfassen, welche derart konfiguriert sein kann, dass auch umfangreiche Datenmengen zur Ver- und Entschlüsselung effizient übermittelt werden können.

Die Vorrichtung kann eine tragbare oder mobile Rechen- oder Kommunikationsvorrichtung sein. Vorzugsweise ist die Vorrichtung eine elektronische Vorrichtung, beispielsweise eine elektronische Rechenvorrichtung. Die Vorrichtung kann ferner ein Laptop, ein Tablet, ein Mobiltelefon, ein Smartphone, ein Medien-Player oder eine andere tragbare Rechen- oder Kommunikationsvorrichtung sein. Die Vorrichtung kann ferner eine in einem Fahrzeug, Flugzeug oder auf einem Schiff fest eingebaute elektronische Vorrichtung sein, beispielsweise ein Infotainment-System in einem Fahrzeug. Auch stationäre Vorrichtungen, beispielsweise PCs, Automaten, Steuervorrichtungen und Konsolen für Maschinen, können entsprechend konfiguriert sein.

Die Schnittstelle kann eingerichtet sein, das Sicherheitsmodul aufzunehmen, indem das Sicherheitsmodul in einem eingesetzten Zustand im direkten physikalischen Kontakt mit der Schnittstelle steht. Vorzugsweise ist das Sicherheitsmodul eine SIM-Karte, ein elektronischer Personalausweis oder eine gesicherte Speicherkarte. Eine gesicherte Speicherkarte kann beispielsweise ein auf einer Mikro-SD-Karte basiertes Sicherheitsmodul sein, welches über den zugehörigen Speicher hinaus Verarbeitungseinheiten aufweisen kann, die eine abgesicherte Kommunikation mit dem Betriebssystem über die Schnittstelle ermöglichen. Das Sicherheitsmodul kann in die Schnittstelle eingesteckt oder anderweitig mit ihr in Kontakt gebracht werden, wodurch die Schnittstelle eine Kommunikation mit dem Sicherheitsmodul aufnehmen kann. Sobald das Sicherheitsmodul aus der Schnittstelle entfernt wird, kann die Schnittstelle dies an das Betriebssystem kommunizieren, um dann weitere Schritte zu veranlassen, beispielsweise eine erneute Konfiguration der Berechtigungen des Zugriffskontrollmoduls. Das Sicherheitsmodul kann jedoch auch ein integraler Bestandteil der Vorrichtung sein.

Das Sicherheitsmodul kann drahtlos an die Schnittstelle gekoppelt sein. Beispielsweise kann eine Kommunikation über Bluetooth oder über Nahfeldkommunikation (NFC) aufgebaut sein. Es ist jedoch verständlich, dass andere drahtlose Kommunikationsmedien, Verfahren und Protokolle eingesetzt werden können, um das Sicherheitsmodul an die Schnittstelle zu koppeln und eine Konfiguration der Berechtigungen des Zugriffskontrollmoduls der Vorrichtung zu ermöglichen.

Die vorangehend in Verbindung mit der Vorrichtung beschriebenen Ausgestaltungen können einzeln oder in beliebiger Kombination auch im Zusammenhang mit dem Verfahren zur abgesicherten Überwachung von Prozessen vorgesehen sein. Nachfolgend werden weitere Ausführungsformen in Verbindung mit dem Verfahren zur abgesicherten Überwachung von Prozessen erläutert.

In einer bevorzugten Ausführungsform umfasst das Konfigurieren ein Freischalten der einen oder mehreren Berechtigungen über das Sicherheitsmodul.

Das Konfigurieren kann ein Laden der einen oder der mehreren Berechtigungen basierend auf Informationen des Sicherheitsmoduls umfassen.

In einer Ausführungsform werden die eine oder die mehreren Berechtigungen dynamisch zur Laufzeit konfiguriert.

Das Verfahren kann ferner ein Authentifizieren eines Benutzers durch das Sicherheitsmodul umfassen, wobei die eine oder die mehreren Berechtigungen nach einer erfolgreichen Authentifizierung des Benutzers konfiguriert werden.

Das Verfahren kann ferner ein Klassifizieren von Zugriffen / Aufrufen und, als Reaktion auf eine Klassifizierung als kritisch, ein Zugreifen auf das Sicherheitsmodul bei der Überwachung des Zugriffs / Aufrufs umfassen.

Es kann vorgesehen sein, dass das Verfahren ferner ein Isolieren von Prozessen in einem oder mehreren Containern durch Ausführen von jedem Prozess in einem der Container und Zuordnen des Prozesses zu diesem Container aufweist. Vorzugsweise umfasst das Isolieren von Prozessen das Überwachen von Zugriffen / Aufrufen durch das Zugriffskontrollmodul. Hierdurch werden eine sichere Kontrolle und Isolation von Containern und der darin ausgeführten Prozesse und Anwendungen auf einem gemeinsam genutzten Betriebssystem-Kernel erreicht.

Vorzugsweise weist das Überwachen ein Überwachen von Zugriffen auf geteilte Ressourcen und von Kommunikationen von Prozessen zwischen unterschiedlichen Containern auf.

Das Verfahren kann ferner ein Zugreifen auf eine Vielzahl von Gruppen von Berechtigungen umfassen, wobei jede Gruppe von Berechtigungen einem Container zugeordnet ist.

Das Verfahren kann ein persistentes Speichern von Daten der zugeordneten Prozesse in jedem Container aufweisen. Vorzugsweise sind die Daten der zugeordneten Prozesse und / oder ein Speicherabbild des gesamten Containers verschlüsselt und das Verfahren umfasst ferner ein Entschlüsseln von verschlüsselten Containern und / oder der zugehörigen Daten, über das Sicherheitsmodul. Entsprechend sind die Container an das jeweilige Sicherheitsmodul gebunden und können nicht ohne das entsprechende Sicherheitsmodul ausgeführt und / oder portiert werden. Hierdurch können wirkungsvoll interne Angriffe abgewehrt werden, wobei einzelne Benutzer zwar Zugriff auf verschlüsselte Container haben können, die Daten jedoch nicht entschlüsseln können, sofern sie nicht über das entsprechende Sicherheitsmodul verfügen.

Es ist ferner ein computer-lesbares Medium oder ein computer-lesbarer Datenträger bereitgestellt, der Befehle aufweist, die, wenn sie auf einer Rechenvorrichtung installiert und von dieser ausgeführt werden, die Rechenvorrichtung dazu veranlassen, ein Verfahren gemäß einer der Ausführungsformen durchzuführen. Beispielsweise kann das computer-lesbare Medium oder der computer-Iesbare Datenträger eine Speicherkarte sein, welche in eine tragbare oder mobile Rechenvorrichtung eingesteckt werden kann, die über die Speicherkarte derart konfiguriert wird, dass sie das Verfahren zur abgesicherten Überwachung von Prozessen gemäß Ausführungsformen durchführt. Die Speicherkarte kann ferner alternativ oder zusätzlich als ein Sicherheitsmodul konfiguriert sein.

Es ist vorgesehen, im Kernel verschiedene Konfigurationen der Schnittstelle bereitzustellen, also im Beispiel von Linux verschiedene LSM-Konfigurationen, wobei jeder der Konfigurationen einem der Container zugeordnet ist, zum Beispiel genau einem der Container. Auf diese Weise können container-spezifische Implementierungen der Schnittstelle bereitgestellt werden, die im Fall des Vorsehens des Sicherheitsmoduls zu dessen Ankopplung dient. Je nach Container, welcher in einer konkreten Betriebs- oder Anwendungssituation auf Ressourcen zugreifen möchte, wird einem der anfragenden oder zugreifenden Container spezifisch zugeordnete Zugriffskontrolle ausgeführt. Im Fall von Linux kann dies mittels der MAC-Komponente erfolgen.

Im Beispielfall von Linux können an die Schnittstelle, welche mittels eines oder mehrerer LSMs implementierbar ist, mehrere Module ankoppeln, die auch als weitere Sicherheitsmodule bezeichnet werden können. Beispielsweise können mehrere SELinux vorgesehen sein. Die Module verfügen über unterschiedliche Policy-Konfigurationen betreffend Zugriffe auf und / oder Aufrufe von Ressourcen. Die Policy-Konfiguration des jeweiligen SELinux oder einer anderen Installation ist mindestens einem oder genau einem der Container zugeordnet und implementiert container-spezifische Policies, insbesondere container-spezifische Zugriffsregeln. Es kann vorgesehen sein, beim Start eines der Container dessen spezifische Konfiguration betreffend Zugriffe / Aufrufe für die Schnittstelle in dem zugeordneten Modul zu speichern.

Für die Schnittstelle mit den mehreren Modulen kann ein gemanagter Modul Stacking Mechanismus implementiert sein. Den Modulen kann hierbei ein Primär- oder Primärsicherheitsmodul vorgeschaltet sein, welches bei einer Zugriffanfrage im Kernel an die MAC angefragt wird. Als Reaktion hierauf kann das Primärmodul alle oder einzelne der Module ansprechen, um die der empfangenen Zugriffanfrage zugeordnete Zugriffsregel für den Betrieb in dem anfragenden Container zu bestimmen.

Es kann eine Vorrichtung gebildet sein, die einen Prozessor sowie mindestens eine Hardware-Ressource aufweist, wobei der Prozessor eingerichtet ist, ein Betriebssystem und mindestens einen Prozess auf dem Betriebssystem auszuführen, und wobei die mindestens eine Hardware-Ressource eingerichtet ist, beim Ausführen des mindestens einen Prozesses aufgerufen zu werden. Jeder Prozess wird in einem oder mehreren Containern ausgeführt und ist diesem zugeordnet, derart, dass jeder Container den oder die zugeordneten Prozesse isoliert. Es ist weiterhin eine Schnittstelle vorgesehen, welche eingerichtet ist, an mehrere Sicherheitsmodule zu koppeln.

In einer möglichen Ausführung sind die mehreren Sicherheitsmodule jeweils mit einem LSM sowie einem zugeordneten SELinux gebildet.

Für die mehreren Sicherheitsmodule kann ein gemanagter Modul Stacking Mechanismus vorgesehen sein. Hierbei können mehrere der Sicherheitsmodule einem primären Sicherheitsmodul nachgelagert sein, zum Beispiel in einer Parallelanordnung.

Das Betriebssystem weist ein Zugriffskontrollmodul auf, das eingerichtet ist, basierend auf einer oder mehreren Berechtigungen einen Zugriff auf die oder einen Aufruf der mindestens eine(n) Hardware-Ressource durch den mindestens einen Prozess zu überwachen. Das Betriebssystem ist eingerichtet, die eine oder mehreren Berechtigungen mittels der mehreren Sicherheitsmodule zu konfigurieren. Die Sicherheitsmodule weisen jeweils eine Konfiguration der Berechtigungen für den Zugriff / Aufruf auf, die einem der Container zugeordnet ist, wobei sich Konfigurationen für verschiedene Container unterscheiden.

Es kann ein Verfahren zur abgesicherten Überwachung von Prozessen vorgesehen sein, bei dem Zugriffs auf die / Aufruf von der mindestens eine(n) Hardware-Ressource durch den mindestens einen Prozess in Abhängigkeit von einer der container-spezifischen Konfigurationen geprüft wird.

### Beschreibung von Ausführungsbeispielen

Nachfolgend werden weitere Ausführungsbeispiel unter Bezugnahme auf Figuren einer Zeichnung erläutert. Hierbei zeigen:
- Fig. 1: eine Infrastruktur eines Systems mit mehreren Ausführungsformen einer Vorrichtung,
- Fig. 2: eine schematische Darstellung der Zugriffskontrolle in einer Vorrichtung gemäß einer Ausführungsform,
- Fig. 3: ein Ablaufdiagramm für eine Ausführungsform eines Verfahrens zur abgesicherten Überwachung von Prozessen,
- Fig. 4: eine schematische Darstellung der Zugriffskontrolle in einer Vorrichtung gemäß einer anderen Ausführungsform und
- Fig. 5: eine schematische Darstellung der Zugriffskontrolle in einer Vorrichtung gemäß einer weiteren Ausführungsform.

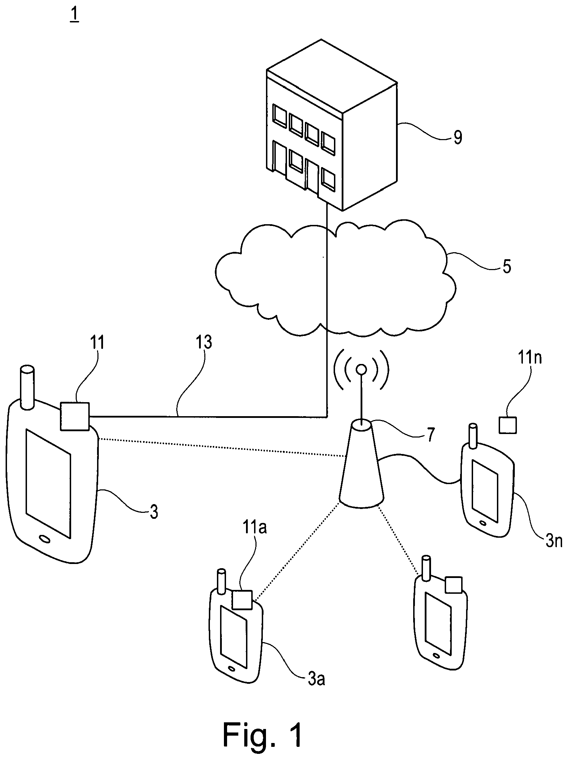

Fig. 1 stellt eine Infrastruktur eines Systems mit Vorrichtungen dar. Das System 1 umfasst mehrere Vorrichtungen 3, 3a, ..., 3n. Die Vorrichtungen 3, 3a, ..., 3n können drahtlos oder drahtgebunden mit einem Netzwerk 5 über einen Access Point oder Router 7 kommunizieren. Das Netzwerk 5 kann ein beliebiges Fernnetz oder Wide Area Network (WAN) oder ein lokales Netz (LAN) sein. Beispielsweise kann das Netzwerk ein Mobilfunknetz oder ein paketbasiertes Datennetz wie das Internet sein. Die Vorrichtungen 3, 3a können drahtlos mit dem Netz verbunden sein, beispielsweise unter Verwendung von WLAN, WiFi-Technologie oder Mobilfunktechnologie, und die Vorrichtung 3n kann fest an den Router 7 des Netzwerks 5 gekoppelt sein, beispielsweise über eine Ethernet-Verbindung. Die Vorrichtungen 3, 3a, ..., 3n können mit dem Netzwerk 5 kommunizieren, um einem Benutzer beliebige Dienste des Netzwerks 5 bereitzustellen, beispielsweise Sprachtelefonie, Voice-over-IP, Videotelefonie, Kurznachrichtendienste und weitere Datendienste, wobei Daten aus Quellen im Netzwerk 5 abgerufen und an Ziele im Netzwerk 5 gesendet werden können. Das System 1 kann ferner eine vertrauenswürdige dritte Instanz oder ein Trust Center 9 umfassen. Das Trust Center 9 kann eine Public Key-Infrastruktur (PKI) aufbauen, wobei die Vorrichtungen 3, 3a, ..., 3n über das Trust Center 9 PKI-Dienste in Anspruch nehmen können. Beispielsweise kann das Trust Center 9 die Ausstellung von Schlüsseln oder Schlüsselpaaren, Zertifikaten oder Identitäten und Authentifizierungsdienste bereitstellen.

Die Vorrichtungen 3, 3a, ..., 3n können ferner jeweils an ein Sicherheitsmodul 11, 11a, ..., 11n koppeln. Die Sicherheitsmodule 11, 11a können beispielsweise in einem direkten physikalischen Kontakt mit der Vorrichtung 3, 3a stehen, beispielsweise indem das Sicherheitsmodul 11, 11a in die Vorrichtung 3, 3a eingesteckt oder in einer Aufnahmevorrichtung angeordnet werden kann. Die Sicherheitsmodule können beispielsweise eine SIM-Karte oder eine Mikro-SD-Karte sein, welche in eine entsprechende Aufnahme der Vorrichtung 3, 3a eingesetzt werden kann. Das Sicherheitsmodul 11n kann ferner drahtlos an die Vorrichtung 3n koppeln, wobei eine Kommunikation zwischen der Vorrichtung 3n und dem Sicherheitsmodul 11n beispielsweise über Bluetooth oder NFC aufgebaut sein kann. Das Sicherheitsmodul 11n kann beispielsweise ein elektronischer Personalausweis, ein Mitarbeiterausweis oder ein beliebiger NFC-fähiger Chip sein. Es sollte jedoch verständlich sein, dass ein Sicherheitsmodul 11, 11a, ..., 11n sowohl direkt als auch drahtlos an eine Vorrichtung koppeln kann. Beispielsweise kann ein Sicherheitsmodul 11, 11a, ..., 11n, z.B. ein Mitarbeiterausweis, zu einer Vorrichtung 3, 3a, ..., 3n sowohl eine drahtlose Kopplung über NFC als auch eine direkte physikalische Kopplung aufbauen, indem der das Sicherheitsmodul 11, 11a, ..., 11n in die Vorrichtung 3, 3a, ..., 3n eingesteckt oder eingeschoben wird.

Die Vorrichtungen 3, 3a, ..., 3n können auch ohne ein Sicherheitsmodul 11, 11a, ..., 11n betriebsfähig sein, können jedoch in diesem Fall in einem abgesicherten Initialmodus arbeiten, der lediglich eine beschränkte Funktionalität zulässt. Beispielsweise kann eine Vorrichtung 3, 3a, ..., 3n in dem eingeschränkten Betriebszustand lediglich den Benutzer auffordern, ein Sicherheitsmodul 11, 11a, ..., 11n einzulegen und eine Authentifikation durchzuführen. Es können jedoch auch allgemeine Dienste bereitgestellt sein, beispielsweise eine Kommunikation zu einem voreingestellten Server über das Netzwerk 5, sicherheitskritische Dienste können jedoch gesperrt sein. Durch Einsetzen des Sicherheitsmoduls 11, 11a, ..., 11n in die Vorrichtung 3, 3a, ..., 3n kann die Funktionalität der jeweiligen Vorrichtung 3, 3a, ..., 3n gemäß den Vorgaben auf dem Sicherheitsmodul 11, 11a, ..., 11n entsperrt und individuell auf den Benutzer des Sicherheitsmoduls 11, 11a, ..., 11n angepasst werden.

Die Sicherheitsmodule 11, 11a, ..., 11n können eingerichtet sein, nur mit einer bestimmten zugeordneten Vorrichtung 3, 3a, ..., 3n zu koppeln und diese freizuschalten. Die Sicherheitsmodule 11, 11a, ..., 11n können jedoch ebenfalls zur Benutzung auf unterschiedlichen Vorrichtungen 3, 3a, ..., 3n eingerichtet sein, so dass beispielsweise das Sicherheitsmodul 11n auch mit der Vorrichtung 3, 3a verwendet werde kann, wobei die Funktionalität der Vorrichtung 3, 3a gemäß den Vorgaben des Sicherheitsmoduls 11n eingerichtet wird.

Nach Kopplung eines Sicherheitsmoduls 11, 11a, ..., 11n an eine der Vorrichtungen 3, 3a, ..., 3n, beispielsweise bei Kopplung des Sicherheitsmoduls 11 an die Vorrichtung 3, kann ein Betriebssystem der Vorrichtung 3 mit dem Sicherheitsmodul 11 kommunizieren, wobei initial über eine optionale Authentifizierung des Benutzers festgestellt werden kann, ob der Benutzer berechtigt ist, die Vorrichtung 3 und das Sicherheitsmodul 11 zu verwenden. Nach einer erfolgreichen Authentifizierung kann das Betriebssystem der Vorrichtung 3 Prozesse und Anwendungen, welche beispielsweise in einem dedizierten Container ausgeführt werden können, initialisieren und ein Zugriffskontrollmodul des Betriebssystems gemäß den Vorgaben des Sicherheitsmoduls 11 konfigurieren. Das Betriebssystem kann hierbei granular vorgehen, indem das Sicherheitsmodul 11 einmal initial die Berechtigungen des Zugriffskontrollmoduls freischaltet oder entsprechende Berechtigungen lädt. Nach der Kopplung des Sicherheitsmoduls 11 an die Vorrichtung 3 und nach der Konfiguration des Zugriffskontrollmoduls kann das Zugriffskontrollmodul damit beginnen, (beabsichtigte) Zugriffe auf einen oder mehrere Hardware-Ressourcen und / oder Aufrufe von Prozessen oder Anwendungen abzufangen und zu überwachen, wobei basierend auf den Berechtigungen, ein Zugriff / Aufruf freigegeben werden kann, wenn eine oder mehrere Berechtigungen erfüllt sind, oder blockiert werden kann, wenn eine oder mehrere Berechtigungen nicht erfüllt sind.

In einem weiteren Schritt können die Zugriffe und / oder Aufrufe klassifiziert werden, so dass bei besonders kritischen Zugriffen und / oder Aufrufen zusätzlich zu einer Prüfung der Berechtigungen im Zugriffskontrollmodul, das Sicherheitsmodul 11 kontaktiert wird. Kritische Aufrufe können beispielsweise Systemaufrufe sein, die eine externe Kommunikation oder einen Aufbau einer externen Kommunikation oder Zugriffe auf sensitive Ressourcen der Vorrichtung 3 betreffen. Optional kann das Sicherheitsmodul 11 auch in diesem Fall eine Verbindung zum Trust Center 9 aufbauen, um eine Entscheidung über den Zugriff und / oder Aufruf herbeiführen zu können.

Alternativ oder zusätzlich kann das Sicherheitsmodul 11 derart konfiguriert sein, dass nach einer optionalen Authentifizierung des Benutzers das Sicherheitsmodul 11 über die Vorrichtung 3 und ihre Verbindung zum Netzwerk 5 eine sichere Verbindung 13 zu dem Trust Center 9 aufbaut, um entweder die Authentifizierung des Benutzers und / oder die Kopplung des Sicherheitsmoduls 11 an die Vorrichtung 3 zu validieren und, alternativ oder zusätzlich, um mindestens eine der Berechtigungen zur Konfiguration des Zugriffskontrollmoduls oder entsprechende zugehörige Informationen von dem Trust Center 9 zu laden.

Die Sicherheitsmodule 11, 11a, ..., 11n können von dem Trust Center 9 ausgegeben und konfiguriert sein. Das Trust Center 9 kann beispielsweise firmenintern aufgebaut sein und die Sicherheitsmodule 11, 11a, ..., 11n in Form von Mitarbeiter- oder Firmenausweisen konfigurieren und ausgeben. Das Trust Center 9 kann ferner eine staatliche Organisation sein, wobei die Sicherheitsmodule 11, 11a, ..., 11n beispielsweise elektronische Personalausweise oder andere hoheitliche Dokumente sein können. Das Trust Center 9 kann ferner ein von einem Unternehmen eingerichtetes Trust Center sein, welches die Sicherheitsmodule 11, 11a, ..., 11n an seine Kunden ausgibt, beispielsweise Kundenkarten, welche zum Entsperren von Vorrichtungen 3, 3a, ..., 3n des Unternehmens verwendet werden können, beispielsweise zur Freischaltung eines Infotainment-Systems in Leihfahrzeugen.

Zur Übermittlung der Berechtigungen von dem Trust Center 9 zu der Vorrichtung 3 kann die abgesicherte Verbindung 13 über einen sicheren Tunnel aufgebaut sein, der über die Verbindung der Vorrichtung 3 mit dem Netzwerk 5 aufgebaut werden kann, beispielsweise mittels VPN. Es sind jedoch auch andere Arten des Aufbaus einer sicheren Verbindung 13 denkbar, welche die Kommunikationsmöglichkeiten der Vorrichtung 3 ausschöpfen. Das Sicherheitsmodul 11 kann jedoch auch über eigene Kommunikationsmittel verfügen, welche eine eigenständige Verbindung zu dem Access Point oder Router 7 oder zu einem anderen Zugangspunkt des Netzwerks 5 oder eines anderen Netzwerks aufbauen können, um mit dem Trust Center 9 zu kommunizieren. Hierdurch kann die Sicherheit noch weiter erhöht werden.

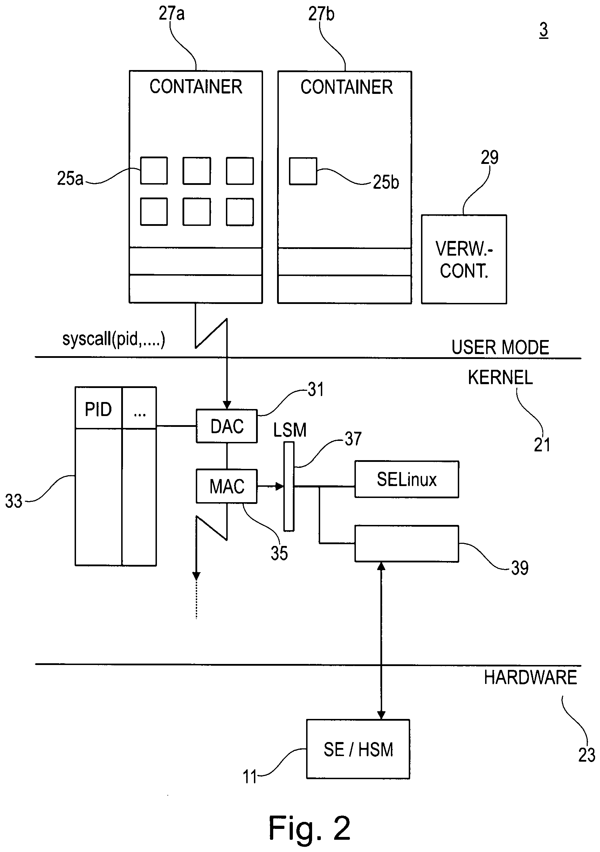

Fig. 2 zeigt eine schematische Darstellung des Aufbaus und der Arbeitsweise einer Vorrichtung gemäß einer Ausführungsform. Die Vorrichtung 3 kann beispielsweise eine der in Fig. 1 gezeigten Vorrichtungen 3, 3a, ..., 3n sein. Die Vorrichtung 3 kann ein Betriebssystem mit einem Kernel 21 aufweisen, der auf der Hardware 23 der Vorrichtung 3 ausführt und die Möglichkeit bietet, Anwendungen und Prozesse auszuführen. Es sollte hierbei verständlich sein, dass das Ausführen von Anwendungen und von Prozessen die gleichen Mechanismen erfordert und insbesondere das Ausführen einer Anwendung das Ausführen mindestens eines Prozesses bedingt. Soweit in der vorliegenden Beschreibung von Ausführen und Überwachen von Prozessen die Rede ist, sollte verständlich sein, dass hiervon auch das Ausführen und Überwachen von Anwendungen mit umfasst ist.

Gemäß dem dargestellten Beispiel ist vorgesehen, dass auf dem Kernel 21 einzelne Prozesse und Anwendungen 25a, 25b im Benutzermodus in jeweiligen Containern 27a, 27b ausgeführt werden. Die Prozesse 25a, 25b werden durch die Container 27a, 27b derart isolieren, dass alle Zugriffe der Anwendungen und Prozesse 25a, 25b überwacht und ggf. beschränkt werden. Entsprechend können die Container 27a, 27b eingerichtet sein, Zugriffe der Anwendungen oder Prozesse 25a, 25b sowohl auf das Betriebssystem und zugehörige Ressourcen der Hardware 23 der Vorrichtung 3 als auch Zugriffe auf Daten der Prozesse 25a, 25b in anderen Containern 27a, 27b zu überwachen und ggf. zu beschränken. Beispielsweise kann der Prozess 25a zum Aufbau einer Telefonkommunikation einen entsprechenden Systemaufruf absetzten, wobei die Telefonkommunikation nur bei entsprechender Berechtigung aufgebaut wird.

In jedem Container 27a, 27b kann ein Subsystem oder eine Laufzeitumgebung eingerichtet sein, beispielsweise ein Android-System im User Mode. Die Anwendungen oder Prozesse 25a können jeweilige Apps des Android-Systems sein. Das Subsystem in jedem Container kann ferner über eine oder mehrere Schichten von dem Kernel 21 des Betriebssystems getrennt sein, beispielsweise indem eine Ausfuhr- oder Laufzeitumgebung, beispielsweise eine Java-VM und weitere Dienste bereitgestellt sein können, auf die die Anwendungen und Prozesse 25a, 25b bzw. entsprechende Apps zugreifen können. Da jedoch in den jeweiligen Containern 27a, 27b kein eigenständiges Betriebssystem ausgeführt wird, sondern lediglich eine Schnittstelle zum Betriebssystem bereitgestellt ist, können sowohl die Container als auch die darin ausgeführten Anwendungen und Prozesse 25a, 25b effizient und ressourcenschonend ausgeführt werden.

Gemäß einer beispielhaften Ausführungsform kann ferner ein Verwaltungs- oder Managementcontainer 29 auf dem Kernel 21 des Betriebssystems ausgeführt werden, der zur Verwaltung und Überwachung der Arbeitsweise der Container 27a, 27b verwendet werden kann. Beispielsweise kann der Verwaltungscontainer 29 einzelne Container 27a, 27b starten, initialisieren, stoppen, deaktivieren, Schlafen legen, beenden und / oder löschen.

Der Verwaltungscontainer 29 kann ferner eingerichtet sein, ein Speicherabbild von jedem Container 27a, 27b zu einem bestimmten Zeitpunkt zu erstellen, dieses optional zu verschlüsseln und persistent in einem Speicher der Hardware 23 der Vorrichtung 3 zu speichern. Beispielsweise kann der Verwaltungscontainer 29 einen Container 27a, 27b anhalten, ein Abbild des verwendeten Speichers anfertigen und mit den aktuellen Zuständen der Anwendungen oder Prozesse 25a, 25b sowie, falls verfügbar, den aktuellen Daten und Zuständen von verwendeten Ressourcen zusammenfassen und in dem Speicherabbild des Containers 27a bzw. 27b einfügen. Der Verwaltungscontainer 29 kann ebenfalls ein Speicherabbild verwenden, dies optional entschlüsseln und hieraus einen Container 27a, 27b aufbauen, starten und / oder initialisieren, so dass der Container 27a, 27b und die darin ausgeführten Anwendungen und Prozesse 25a, 25b die Bearbeitung an derselben Stelle aufnehmen können, zu der der Container 27a, 27b unterbrochen und schlafen gelegt worden ist.

Die Isolation der Anwendung und Prozesse 25a, 25b in den jeweiligen Containern 27a, 27b erfolgt gemäß einer Ausführungsform durch Abfangen von Aufrufen, beispielsweise von Systemaufrufen im Kernel 21. Hierbei werden die Aufrufe geprüft und Aufrufe, welche die zugestandene Funktionalität der jeweiligen Container 27a, 27b übersteigen, können blockiert werden. Der Kernel 21 kann unterschiedliche Mechanismen zur Zugriffskontrolle bereitstellen. Beispielsweise kann ein auf Linux basiertes Betriebssystem im Kernel 21 mehrere Stufen der Zugriffskontrolle bereitstellen. Obwohl Ausführungsformen mit Bezug auf das Linux-Betriebssystem oder Derivaten hiervon, wie z.B. das Android-Projekt, beschrieben sein können, sollte verständlich sein, dass die beschriebenen Aspekte mit anderen Betriebssystemen verwendet werden können, beispielsweise das Windows-Betriebssystem, verschiedenen Unix-Betriebssysteme und anderen Betriebssysteme, welche eine Schnittstelle bereitstellen, um Aufrufe von Prozessen zu überwachen.

Der Kernel 21 kann eine disktrete Zugriffskontrolle oder Discretionary Access Control (DAC) 31 kernel-seitig bereitstellen, in der jeder Aufruf anhand der Prozess-ID in einer Tabelle 33 nachgeschlagen wird und anhand der dort vorgesehenen Einträge entschieden werden kann, ob der Zugriff freigegeben oder blockiert werden soll. Da die Tabelle 33 im Kernel 21 konfigurierbar gestaltet sein kann, kann eine einfache Zugriffskontrolle umgesetzt werden. Der Kernel 21 kann ferner eine weitere frei konfigurierbare Komponente zur Zugriffskontrolle bereitstellen, in einem Linux-System auch als Mandatory Access Control (MAC) 35 bezeichnet. Die MAC 35 kann eine Schnittstelle 37 bereitstellen, welche es erlaubt, Informationen über abgefangene Systemaufrufe zu erhalten, diese zu behandeln und eine Entscheidung zu treffen, ob der aktuelle Aufruf blockiert oder freigegeben werden soll. In Linux-Systemen kann diese Schnittstelle 37 beispielsweise über Linux Security Modules (LSM) implementiert sein. In einer Implementierung kann LSM Hooks an jeder Stelle im Kernel 21 einfügen, an der ein Aufruf eines Prozesses 25a, 25b oder allgemein eines Prozesses im Benutzermodus zu einem Zugriff auf interne Kernel-Objekte führen kann, welche als wesentlich eingestuft sein können, beispielsweise hinsichtlich von Zugriffen auf Ressourcen der Hardware 23 oder Kommunikation mit anderen Prozessen 25a, 25b über die internen Kernel-Objekte.

In dem dargestellten Beispiel kann die Vorrichtung 3 derart eingerichtet sein, dass unterschiedliche Module 38 an die Schnittstelle 37 ankoppeln, um die Überwachung der Aufrufe durchzuführen. In Linux-Systemen kann beispielsweise SELinux installiert sein, welches über Policies konfiguriert sein kann, um die Zugriffskontrolle durchzuführen. Alternativ oder zusätzlich kann ein weiteres Modul 39 vorhanden sein, welches weitere Berechtigungen zur Überwachung der Aufrufe bereitstellt, die dynamisch durch ein Sicherheitsmodul 11 konfiguriert sein können. Diese Berechtigungen können die Policies von SELinux ergänzen oder hierzu alternativ eingesetzt sein. Entsprechend kann das Sicherheitsmodul 11 ebenfalls Policies von SELinux konfigurieren.

In Kombination mit dem Sicherheitsmodul 11 oder auch bei einer Implementierung ohne dieses kann vorgesehen sein, im Kernel verschiedene Konfigurationen der Schnittstelle 37 bereitzustellen, also im Beispiel von Linux verschiedene LSM-Konfigurationen, wobei jeder der Konfigurationen einem der Container 27a, 27b zugeordnet ist, zum Beispiel genau einem der Container 27a, 27b. Auf diese Weise können container-spezifische Implementierungen der Schnittstelle 37 bereitgestellt werden. Je nach Container 27a, 27b, welcher in einer konkreten Betriebs- oder Anwendungssituation auf Ressourcen zugreifen oder diese aufrufen möchte, wird einem der aufrufenden oder zugreifenden Container 27a, 27b spezifisch zugeordnete Zugriffskontrolle ausgeführt. Im Fall von Linux erfolgt dies mittels des Elements MAC 35.

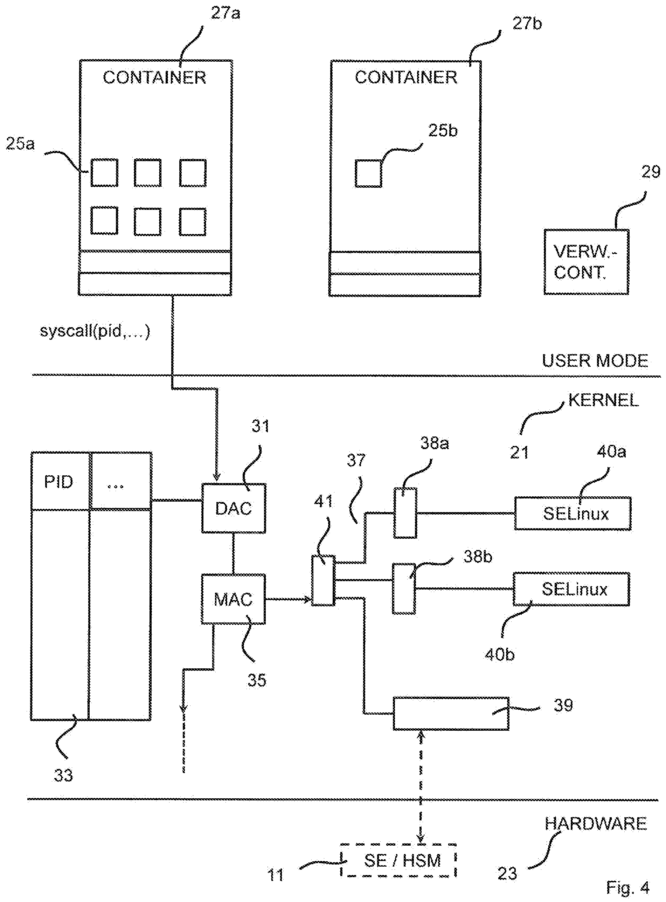

Die Schnittstelle 37 kann mehrere Module 38a, 38b, 41 aufweisen, die im Fall von Linux als LSM ausführbar sind. Eine Ausführung n Module (n ≥ 2) kann vorgesehen sein. Fig. 4 zeigt eine Ausbildung schematisch. An die Module 38a, 38b können Sicherheitsmodule ankoppeln, beispielsweise im Fall von Linux mehrere SELinux 40a, 40b. Die Module 38a, 38b verfügen über unterschiedliche Policy-Konfigurationen betreffend Zugriffe auf / Aufruf von Ressourcen. Die Policy-Konfiguration des jeweiligen SELinux 40a, 40b oder einer anderen Installation ist einem der Container 27a, 27b zugeordnet und implementiert container-spezifische Policies, insbesondere container-spezifische Zugriffsregeln. Im gezeigten Beispiel ist das Modul 38a mit dem SELinux 40a dem Container 27a zugeordnet, weshalb das Modul 38a mit dem SELinux 40a eine Zugriffskonfiguration für den Container 27a bereitstellt. Vergleichbar verhält es sich mit dem Modul 38b und dem SELinux 40b in Beziehung zu dem Container 27b.

Es kann vorgesehen sein, beim Start eines der Container 27a, 27b dessen spezifische Konfiguration für die Schnittstelle 37 in dem zugeordneten Modul 38a, 38b zu speichern.

Für die Schnittstelle 37 mit den mehreren Modulen 38a, 38b ist gemäß dem Beispiel in Fig. 4 ein gemanagter Modul Stacking Mechanismus implementiert. Den Modulen 38a, 38b vorgeschaltet ist ein Primär- oder Primärsicherheitsmodul 41, welches bei einer Zugriffanfrage im Kernel 21 an die MAC 35 angefragt wird. Als Reaktion hierauf kann das Primärmodul 41 alle oder einzelne der Module 38a, 38b ansprechen, um die der empfangenen Zugriffanfrage zugeordnete Zugriffsregel für den Betrieb in dem anfragenden Container zu bestimmen.

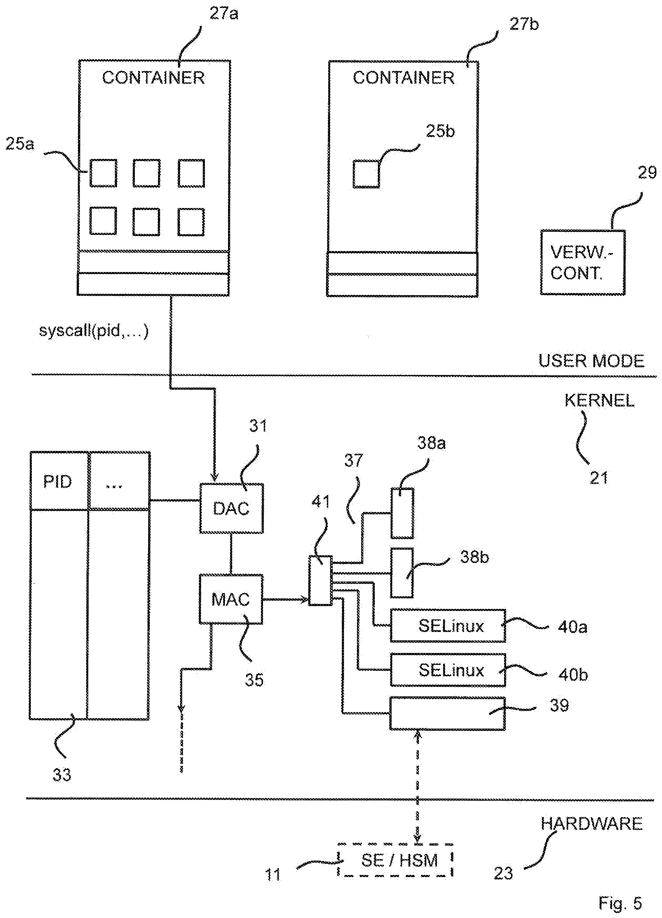

Fig. 5 zeigt eine alternative Ausführung, bei der die mehreren SELinux 40a, 40b, die jeweils einem der beispielsweise als LSM ausgeführten Module 38a, 38b zugeordnet sind, also eine jeweilige Konfiguration bereitstellen, direkt vom Primär- oder Primärsicherheitsmodul 41 ab- oder anfragbar sind.

Das Sicherheitsmodul 11, das auch als ein Security Element (SE) bezeichnet werden kann, kann ein Hochsicherheitsmodul (High Security Module, HSM) sein, das ferner einen Verschlüsselungsbaustein aufweisen kann, der zur Entschlüsselung und Verschlüsselung von Daten basierend auf Schlüsseln des Sicherheitsmoduls 11 eingesetzt werden kann. Beispielsweise können die Berechtigungen des Moduls 39 in dem Modul 39 selbst oder in einem Speicher in verschlüsselter Form gespeichert sein, wobei das Betriebssystem die verschlüsselten Berechtigungen an das Hochsicherheitsmodul übergeben kann, das dann die Entschlüsselung der Berechtigungen vornehmen kann und diese an das Modul 39 zur Überwachung der Aufrufe übergeben kann. Entsprechend kann das Hochsicherheitsmodul auch eingerichtet sein, ein verschlüsseltes Speicherabbild der Container 27a, 27b zu verschlüsseln und / oder zu entschlüsseln. Hierdurch wird erreicht, dass sowohl Berechtigungen als auch zugehörige Container 27a, 27b nur bei Kopplung der Vorrichtung 3 an ein dediziertes Sicherheitselement 11 entschlüsselt werden können, so dass die Vorrichtung 3 mit der durch das Sicherheitsmodul 11 festgelegten Funktionalität betrieben werden kann.

Andererseits können bei Einsatz eines anderen Sicherheitsmoduls die in der Vorrichtung 3 gespeicherten verschlüsselten Speicherabbilder der Container 27a, 27b nicht entschlüsselt werden, so dass eine Verwendung der entsprechenden Container 27a, 27b nicht möglich sein muss. Stattdessen kann ein anderes Sicherheitsmodul einen anderen dedizierten Container (nicht gezeigt) und sein zugehöriges Speicherabbild entschlüsseln und entsprechende Berechtigungen für das Modul 29 setzen. Entsprechend können Container nicht einfach kopiert und auf ein anderes System portiert werden, solange nicht das entsprechende Sicherheitsmodul vorliegt. Hierdurch können interne Angriffe abgewehrt werden und es kann sichergestellt werden, dass Container nur mit dem zugehörigen Sicherheitsmodul verwendbar sind.

Um eine Portierung eines Speicherabbilds von Containern 27a, 27b noch weiter zu erschweren, kann das Speicherabbild der Container 27a, 27b auch mit einem kombinierten Schlüssel verschlüsselt werden, wobei zur Schlüsselgenerierung ein gerätespezifischer Schlüssel und ein Schlüssel oder Schlüsselpaar des Sicherheitsmoduls verwendet wird, so dass das Speicherabbild des Containers 27a, 27b nur auf einer bestimmten Vorrichtung 3 mit einem bestimmten Sicherheitsmodul 11 entschlüsselt und verwendet werden kann.

Durch die Zugriffsüberwachung von Aufrufen von Prozessen 25a, 25b der Container 27a, 27b und die Absicherung der Bedingungen für die Zugriffskontrolle durch das Sicherheitsmodul 11 wird ein gehärteter Container bereitgestellt, der durch das jeweilige Sicherheitsmodul personalisiert ist. Mögliche Einsatzgebiete bestehen neben den Vorgenannten im Bereich des "Bring Your Own Device"-Ansatzes (BYOD), welches in Firmenumgebungen Mitarbeitern ermöglicht, eigene elektronische Vorrichtungen mitzubringen oder firmeneigene Vorrichtungen auch für private Zwecke zu nutzen. Hierbei können in einzelnen Containern unterschiedliche Umgebungen bereitgestellt werden, welche über ein Sicherheitsmodul mit entsprechender Funktionalität versehen werden können. Beispielsweise können auf einem Geschäfts-Smartphone ein Geschäftsbereich und ein Privatbereich in entsprechenden Containern bereitgestellt sein. Der Geschäftsbereich kann strikt abgesichert sein, wohingegen die Verwendung des privaten Bereichs flexibleren Regeln unterliegen kann, die Zugriffe auf firmeninterne Ressourcen jedoch beschränkt oder gänzlich ausgeschlossen sein können.

Ein weiterer Anwendungsbereich von Ausführungsformen kann Infotainment-Systeme in Leihfahrzeugen oder eines Fuhrparks betreffen, wobei die entsprechenden Sicherheitsmodule ein Mitgliederausweis oder ein Firmenausweis sein können.

In einem weiteren beispielhaften Anwendungsbereich kann ein Smartphone oder ein Tablet zur Steuerung von Vorrichtungen in einem Haus eingesetzt werden, gemäß den Ansätzen von "Smart Home", welche die Überwachung von individuellen Haushaltsgeräten und Versorgungsgeräten eines Hauses oder einer Wohnung ermöglichen. Durch das Entsperren des entsprechenden Containers, beispielsweise durch die Verwendung eines zuvor konfigurierten Personalausweises, kann die Steuerung der Geräte und der Funktion sicherer gestaltet werden. Es kann ferner vorgesehen sein, dass die Vorrichtung, beispielsweise das Smartphone oder das Tablet, durch einen Energieversorger oder ein ähnliches Versorgungsunternehmen zur Steuerung der Haushaltsgeräte und Versorgungsgeräte, beispielsweise einer Heizungsvorrichtung, für den Kunden bereitgestellt sein kann, wobei ein Container zur Steuerung der Funktionalität durch Kopplung der Vorrichtung an eine entsprechende Kundenkarte oder den Personalausweis freigegeben sein kann. Das Versorgungsunternehmen kann jedoch als Bonus für den Kunden vorsehen, dass in einem weiteren Container auf der Vorrichtung ein privater Bereich für den Nutzer bereitgestellt wird, der beispielsweise auch ohne Verwendung eines Sicherheitsmoduls verwendbar ist.

In einem noch weiteren Einsatzgebiet der Ausführungsformen können Vorrichtungen zur Steuerung von Industrieanlagen oder Maschinen bereitgestellt sein, beispielsweise gemäß dem "Industrie 4.0"-Ansatz, so dass unterschiedliche Maschinenhersteller und unterschiedliche Maschinenführer über entsprechend eingerichtete Container und zugehörige Sicherheitsmodule in einer abgesicherten Art und Weise auf die Funktionalität der Industrieanlagen oder Maschinen Einfluss nehmen und diese sicher steuern können.

Obwohl beispielhafte Anwendungsgebiete beschrieben sind, sollte klar sein, dass Vorrichtungen gemäß den erläuterten Ausführungsformen für weitere Anwendungsgebiete vorgesehen sein können, in denen ein durch ein Sicherheitsmodul personalisierter gehärteter Container vorteilhaft eingesetzt werden kann.

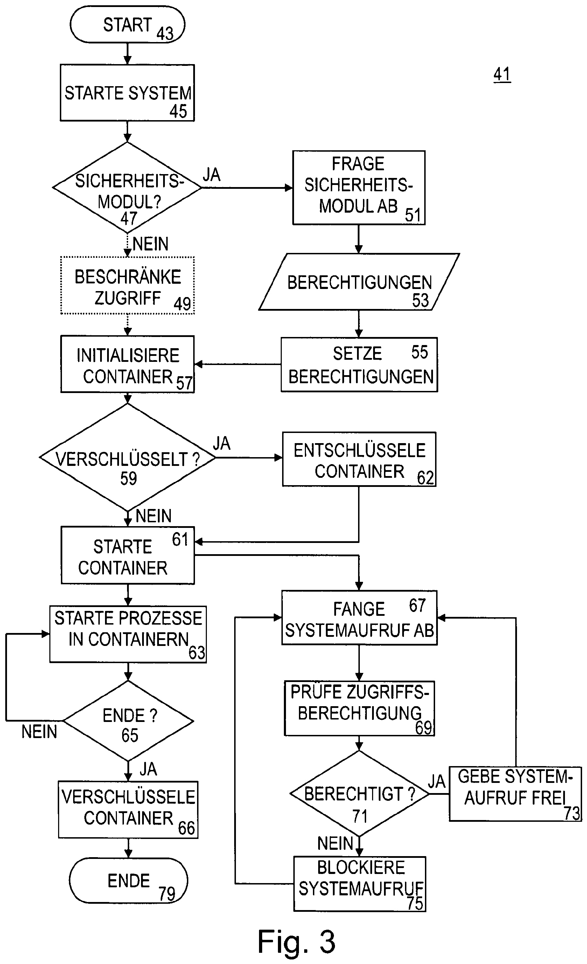

Fig. 3 stellt ein Ablaufdiagramm eines Verfahrens gemäß einer Ausführungsform dar. Das Verfahren 41 kann auf einer Vorrichtung gemäß den beschriebenen Ausführungsformen ausgeführt werden, beispielsweise auf Vorrichtung 3 aus Fig. 1 und 2 und Vorrichtungen 3a, ..., 3n aus Fig. 1. Das Verfahren 41 ermöglicht eine durch ein Sicherheitsmodul gestützte Zugriffskontrolle, insbesondere für eine Isolation von Containern, welche auf einem gemeinsamen Betriebssystem-Kernel ausgeführt werden. Das Verfahren 41 kann in Schritt 43 beginnen und ein System, beispielsweise ein Betriebssystem und einen zugehörigen Kernel der Vorrichtung, in Block 45 starten und initialisieren. In Block 47 kann festgestellt werden, ob die Vorrichtung an ein Sicherheitsmodul gekoppelt ist. Wenn kein Sicherheitsmodul an die Vorrichtung gekoppelt ist, kann das Betriebssystem entweder heruntergefahren werden und das Verfahren kann enden. Jedoch kann das Betriebssystem optional, was durch gestrichelte Linien in Fig. 3 gezeigt ist, damit fortfahren, in Block 49 die Funktionalität des Systems auf beispielsweise rudimentäre Operationen zu beschränken.

Ist jedoch die Vorrichtung an ein Sicherheitsmodul gekoppelt, kann in Block 51 eine Kommunikation mit dem Sicherheitsmodul aufgebaut werden. Hierbei kann die Vorrichtung ebenfalls eine Authentifizierung eines Benutzers der Vorrichtung bei dem Sicherheitsmodul vornehmen. Die Authentifizierung des Benutzers kann mittels eines Prozesses ausgeführt werden, der Verwaltungscontainer 29 (vgl. Fig. 2) läuft.

Nach einer Abfrage des Sicherheitsmoduls und alternativ oder zusätzlich nach einer erfolgreichen Authentifizierung des Benutzers kann das Sicherheitsmodul dem Betriebssystem Berechtigungen 53 oder Daten bereitstellen, welche zur Bestimmung der Berechtigungen 53 herangezogen werden können, beispielsweise Schlüssel zum Entschlüsseln von Berechtigungen, Angaben einer Quelle zum Laden von Berechtigungen und ähnliche Daten. Sobald die Berechtigungen vorliegen, kann das Verfahren 41 in Block 55 damit fortfahren, die Berechtigungen 53 zu setzen und in Block 57 einen oder mehrere Container zu initialisieren. Beispielsweise können ein oder mehrere Gruppen oder Sätze von Berechtigungen für einen oder mehrere Container bereitgestellt sein, welche entsprechend initialisiert und gestartet werden können. Nach einer Bestimmung in Block 59, ob die Container oder die zugehörigen Speicherabbilde der Container verschlüsselt sind, können die Container entweder in Block 61 direkt gestartet werden oder über einen zusätzlichen Entschlüsselungsschritt 63 entschlüsselt und danach in Block 61 gestartet werden.

Zur Entschlüsselung der Container in Block 63 kann eine weitere Kommunikation mit dem Sicherheitsmodul aufgebaut werden, wobei basierend auf Informationen, die von dem Sicherheitsmodul erhalten werden oder direkt durch das Sicherheitsmodul, die Container oder die zugehörigen Speicherabbilde der Container entschlüsselt werden können.

Nach einem Start der Container in Block 61 kann das Verfahren 41 damit fortfahren, in Block 63 Prozesse in den Containern zu starten. Beispielsweise können vorinitialisierte Prozesse in jeweiligen Containern gestartet werden. Alternativ oder zusätzlich kann auch ein Benutzer angebotene Prozesse oder Anwendungen in den Container starten.

Das Verfahren 41 kann in Block 65 kontinuierlich überwachen, ob der Betrieb eines Containers beendet werden soll. Beispielsweise kann ein Benutzer durch ein explizites Kommando die Arbeit mit dem Container beenden. Alternativ kann auch in Abhängigkeit von internen Bedingungen, z.B. nach Ablauf einer bestimmten Zeitdauer, der Betrieb des Containers eingestellt werden. Ferner kann auch bei Entfernen des Sicherheitsmoduls systemseitig die Arbeitsweise eines Containers beendet werden.

Wird in Block 65 festgestellt, dass der Betrieb eines Containers beendet werden soll, so kann das Speicherabbild des Containers oder der gesamte Container in Block 66 verschlüsselt werden. Handelt es sich hierbei um den letzten Container und soll das gesamte System heruntergefahren werden, kann das Verfahren 41 bei 79 enden.

Nach einem Start der Container in Block 61 oder bereits zu einem früheren Zeitpunkt, beispielsweise beim Start des Systems in Block 45, kann das Betriebssystem ferner kontinuierlich damit beginnen, in Block 67 Aufrufe, insbesondere Systemaufrufe, von Prozessen oder Anwendungen der Container abzufangen und Zugriffsberechtigungen der jeweiligen Aufrufe als solche und / oder eines hiermit beabsichtigten Hardware-Ressourcenzugriffs in Block 69 zu prüfen. Die Überwachung und Prüfung der Aufrufe der Anwendungen oder Prozesse und / oder der hiermit verbundenen Hardware-Zugriffe erfolgt vorzugsweise basierend auf den jeweiligen zugeordneten Berechtigungen 53, welche über das Sicherheitsmodul konfiguriert werden. Die Konfiguration der Berechtigungen 53 kann dynamisch zur Laufzeit erfolgen und wird dynamisch bei der Prüfung in Block 69 berücksichtigt, so dass beispielsweise bei einem Start der Zugriffskontrolle bereits in Block 45 zuerst alle Systemaufrufe gegen restriktive Berechtigungen geprüft werden können und erst bei Konfiguration der Berechtigungen in Block 55 die entsprechende Funktionalität freigeschaltet werden kann.

Wird in Block 71 basierend auf den Berechtigungen 53 oder den initialen restriktiven Berechtigungen festgestellt, dass eine oder mehrere Berechtigungen erfüllt sind, kann der Systemaufruf / Hardware-Zugriff in Block 73 freigegeben werden und die Zugriffskontrolle kann mit Block 67 fortfahren. Ist jedoch eine Berechtigung oder sind mehrere Berechtigungen nicht erfüllt, kann in Block 75 der Systemaufruf und / oder der Zugriff auf eine Hardware-Ressource blockiert werden und die Zugriffskontrolle kann mit Block 67 fortfahren. Die Zugriffskontrolle kann unabhängig und parallel zum Start und zur Überwachung der Prozesse und Anwendungen in Blöcken 63, 65 erfolgen, und beendet werden, nachdem im Block 65 festgestellt worden ist, dass alle Container beendet werden sollen.

Es kann auch die Situation auftreten, dass ein Systemaufruf (Prozessaufruf) an sich freigegeben wird, ein hiermit in Verbindung stehender Ressourcenzugriff aber verweigert / blockiert wird, weil zum Beispiel ein nicht berechtigter Container auf eine Hardware-Ressource zugreifen möchte, für die der Container keine Berechtigung hat. Auch kann in einer Ausgestaltung der Prozessaufruf freigegeben werden, dann aber in seiner Ausführung zurückgestellt (zunächst blockiert) werden, da er für die aufgerufene Hardware-Ressource eine geringere Priorität aufweist als ein schon laufender Prozess oder ein auch noch zur Ausführung anstehender Prozess.

Obwohl das Verfahren 41 und die zugehörigen Schritte als ein sequentielles Ablaufdiagramm dargestellt sind, sollte verständlich sein, dass einzelne Blöcke ausgelassen werden können und weitere Verfahrensschritte hinzugefügt werden können. Ferner können einzelne Schritte nur optional ausgeführt werden. Die einzelnen Schritte können zudem sequentiell oder parallel ausgeführt werden. Beispielsweise kann die Zugriffskontrolle 67 bis 75 parallel zur Ausführung und Überwachung der Prozesse in Blöcken 63, 65 durchgeführt werden.

Das in Fig. 3 dargestellte Verfahren 41 kann in Form von Befehlen beschrieben sein, welche auf einem computer-lesbaren Medium oder Datenträger gespeichert sein können und welche auf eine Vorrichtung gemäß den Ausführungsformen geladen werden können, um die Vorrichtung derart zu konfigurieren, dass sie das Verfahren 41 zur abgesicherten Überwachung von Prozessen, beispielsweise zur Isolation von Betriebssystem-Containern, durchführt.

Es ergibt sich ferner, dass einzelne Merkmale der offenbarten Ausführungsformen beliebig kombiniert werden können. Beispielsweise können die Vorrichtungen 3, 3a, ..., 3n aus Fig. 1 und ihre Funktionalität beliebig mit Verfahrensschritten von Verfahren gemäß den Ausführungsformen konfiguriert werden. Ferner können Verfahren gemäß den Ausführungsformen mit der Funktionalität von Komponenten von Vorrichtungen gemäß den Ausführungsformen erweitert werden. Die in der vorstehenden Beschreibung, den Ansprüchen und den Figuren offenbarten Merkmale können somit sowohl einzeln als auch in beliebiger Kombination für die Verwirklichung der verschiedenen Aspekte in ihren verschiedenen Ausführungsformen von Bedeutung sein.

## Patentansprüche

1. Vorrichtung, mit:
- einem Prozessor, der eingerichtet ist, ein Betriebssystem und Prozesse (25a, 25b) auf dem Betriebssystem auszuführen, und
- einer Schnittstelle (37), welche eingerichtet ist, an ein Sicherheitsmodul (11) zu koppeln,
wobei
- das Betriebssystem ein Zugriffskontrollmodul aufweist, das eingerichtet ist, basierend auf einer oder mehreren Berechtigungen Aufrufe der Prozesse (25a, 25b) zu überwachen, und
- das Betriebssystem eingerichtet ist, die eine oder mehreren Berechtigungen mittels des Sicherheitsmoduls (11) zu konfigurieren,
**dadurch gekennzeichnet, dass**
- das Zugriffskontrollmodul mit einer diskreten Zugriffskontrolle (31) und einer frei konfigurierbaren Zugriffskontrolle (35) gebildet ist, die die Schnittstelle (37) zur Ankopplung des Sicherheitsmoduls (11) bereitstellt,
- jeder der Prozess (25a, 25b) in einem oder mehreren Containern (27a, 27b) ausgeführt wird und diesem zugeordnet ist, derart, dass jeder Container (27a, 27b) den oder die zugeordneten Prozesse (25a, 25b) isoliert, und
- eine container-spezifische Implementierung der Schnittstelle (37) bereitgestellt ist, bei der die Schnittstelle (37) mehrere Module (38a, 38b) aufweist, die jeweils eine container-spezifische Konfiguration bereitstellen, wobei sich die container-spezifischen Konfigurationen unterscheiden und jeweils einem der Container (27a, 27b) zugeordnet sind.

2. Vorrichtung nach Anspruch 1, wobei die eine oder mehreren Berechtigungen konfiguriert werden, indem das Betriebssystem die eine oder mehreren Berechtigungen über das Sicherheitsmodul (11) freischaltet.

3. Vorrichtung nach Anspruch 1 oder 2, wobei die eine oder mehreren Berechtigungen konfiguriert werden, indem das Betriebssystem die eine oder mehreren Berechtigungen basierend auf Informationen des Sicherheitsmoduls (11) lädt.

4. Vorrichtung nach einem der vorhergehenden Ansprüche, wobei die eine oder mehreren Berechtigungen dynamisch zur Laufzeit konfiguriert werden.

5. Vorrichtung nach einem der vorhergehenden Ansprüche, wobei das Zugriffskontrollmodul eingerichtet ist, Ressourcen-Aufrufe zu klassifizieren und, als Reaktion auf eine Klassifizierung eines Ressourcen-Aufrufs als kritischer Aufruf, bei der Überwachung des Ressourcen-Aufrufs auf das Sicherheitsmodul (11) zuzugreifen.

6. Vorrichtung nach einem der vorhergehenden Ansprüche, wobei das Zugriffskontrollmodul auf Gruppen von Berechtigungen zugreift, wobei jede Gruppe von Berechtigungen einem Container (27a, 27b) zugeordnet ist.

7. Vorrichtung nach einem der vorhergehenden Ansprüche, wobei jeder Container (27a, 27b) eingerichtet ist, Daten der zugeordneten Prozesse (25a, 25b) persistent zu speichern, wobei die Daten verschlüsselt sind und über das Sicherheitsmodul (11) entschlüsselbar sind.

8. System, aufweisend mindestens eine Vorrichtung (3, 3a, ..., 3n) nach einem der vorhergehenden Ansprüche.

9. System nach Anspruch 8, aufweisend mindestens eine Instanz (9) eines vertrauenswürdigen Dritten, die eine Public Key-Infrastruktur bereitstellt.

10. Verfahren zur abgesicherten Überwachung von Prozessen, das folgende Schritte aufweist:
- Ausführen eines Betriebssystems und von Prozessen (25a, 25b) auf dem Betriebssystem, wobei jeder der Prozesse (25a, 25b) in Containern (27a, 27b) ausgeführt und diesem zugeordnet wird, derart, dass jeder Container (27a, 27b) den oder die zugeordneten Prozesse (25a, 25b) isoliert,
- Bestimmen (47), ob ein Sicherheitsmodul (11) angekoppelt ist,
- Überwachen (67) eines Zugriffs auf Aufrufe der Prozesse (25a, 25b) basierend auf einer oder mehreren Berechtigungen (53), mittels des Sicherheitsmoduls (11) konfiguriert werden (55), durch ein Zugriffskontrollmodul des Betriebssystems, wobei
- das Zugriffskontrollmodul mit einer diskreten Zugriffskontrolle (31) und einer frei konfigurierbaren Zugriffskontrolle (35) gebildet wird, die eine Schnittstelle (37) bereitstellt, welche der Ankopplung des Sicherheitsmoduls (11) dient, und
- eine container-spezifische Implementierung der Schnittstelle (37) bereitgestellt wird, bei der die Schnittstelle (37) mehrere Module (38a, 38b) aufweist, die jeweils eine container-spezifischen Konfiguration bereitstellen, wobei sich die container-spezifischen Konfigurationen unterscheiden und jeweils einem der Container (27a, 27b) zugeordnet sind.

11. Verfahren nach Anspruch 10, wobei das Konfigurieren (55) ein Freischalten der einen oder mehreren Berechtigungen (53) über das Sicherheitsmodul (11) umfasst.

12. Verfahren nach Anspruch 10 oder 11, wobei das Konfigurieren (55) ein Laden der einen oder mehreren Berechtigungen (53) basierend auf Informationen des Sicherheitsmoduls (11) umfasst.

13. Verfahren nach einem der Ansprüche 10 bis 12, wobei die eine oder mehreren Berechtigungen (53) dynamisch zur Laufzeit konfiguriert werden.

14. Verfahren nach einem der Ansprüche 11 bis 13, das ferner ein Authentifizieren eines Benutzers durch das Sicherheitsmodul (11) umfasst, wobei die eine oder mehreren Berechtigungen (53) nach einer erfolgreichen Authentifizierung des Benutzers konfiguriert werden.

## Claims

1. A device having:
- a processor which is set up to run an operating system and processes (25a, 25b) on the operating system and
- an interface (37) which is set up to couple to a security module (11),
wherein
- the operating system has an access control module that is set up to monitor calls for the processes (25a, 25b) based on one or multiple authorizations and
- the operating system is set up to configure the one or multiple authorizations by means of the security module (11),
**characterized in that**
- the access control module is created with a discrete access control (31) and a freely configurable access control (35) which provides the interface (37) for coupling the security module (11),
- each of the processes (25a, 25b) is executed in one or multiple containers (27a, 27b) and assigned thereto in such a manner that each container (27a, 27b) isolates the assigned process or processes (25a, 25b) and
- a container-specific implementation of the interface (37) is provided in which the interface (37) exhibits multiple modules (38a, 38b) each of which provide a container-specific configuration, wherein the container-specific configurations differ and are each assigned to one of the containers (27a, 27b).

2. The device according to claim 1, wherein the one or multiple authorizations are configured in that the operating system releases the one or multiple authorizations via the security module (11).

3. The device according to claim 1 or 2, wherein the one or multiple authorizations are configured in that the operating system loads the one or multiple authorizations based on information from the security module (11).

4. The device according to one of the preceding claims, wherein the one or multiple authorizations are configured dynamically to the running time.

5. The device according to one of the preceding claims, wherein the access control module is set up to classify resource calls and, in response to a resource call being classified as critical, to access the security module (11) when monitoring the resource call.

6. The device according to one of the preceding claims, wherein the access control module accesses groups of authorizations, wherein each group of authorizations is assigned to a container (27a, 27b).

7. The device according to one of the preceding claims, wherein each container (27a, 2b) is set up to persistently store data on the assigned processes (25a, 25b), wherein the data are encoded and can be decoded via the security module (11).

8. A system exhibiting at least one device (3, 3a, ..., 3n) according to one of the preceding claims.

9. The system according to claim 8, exhibiting at least one entity (9) of a trusted third party which supplies a public key infrastructure.

10. A method for the secured monitoring of processes which comprises the following steps:
- running an operating system and processes (25a, 25b) on the operating system, wherein each of the processes (25a, 25b) is run in containers (27a, 27b) and assigned thereto in such a manner that each container (27a, 27b) isolates the assigned process or processes (25a, 25b),
- determining (47) whether a security module (11) is coupled,
- monitoring (67) access to calls for the processes (25a, 25b) based on one or multiple authorizations (53) configured by means of the security module (11) by an access control module of the operating system, wherein
- the access control module is created with a discrete access control (31) and a freely configurable access control (35) which provides an interface (37) used to couple the security module (11) and
- a container-specific implementation of the interface (37) is provided in which the interface (37) has a plurality of modules (38a, 38b) each of which provide a container-specific configuration, wherein the container-specific configurations differ and are each assigned to one of the containers (27a, 27b).

11. The method according to claim 10, wherein the configuring (55) comprises a release of the one or multiple authorizations (53) via the security module (11).

12. The method according to claim 10 or 11, wherein the configuring (55) comprises loading of the one or multiple authorizations (53) based on information from the security module (11).

13. The method according to one of claims 10 to 12, wherein the one or multiple authorizations (53) are configured dynamically to the running time.

14. The method according to one of claims 11 to 13 which further comprises authentication of a user by the security module (11), wherein the one or multiple authorizations (53) are configured following a successful authentication of the user.

## Revendications

1. Dispositif, comportant :
- un processeur, qui est conçu afin d'exécuter un système d'exploitation et des processus (25a,25b) sur le système d'exploitation, et
- une interface (37), qui est conçue afin de se couplée à un module de sécurité (11),
dans lequel
- le système d'exploitation présente un module de contrôle d'accès, qui est conçu afin de surveiller des appels des processus (25a,25b) sur la base d'une ou plusieurs autorisations, et
- le système d'exploitation est conçu afin de configurer l'une ou les plusieurs autorisations au moyen du module de sécurité (11),
**caractérisé en ce que**
- le module de contrôle d'accès est formé avec un contrôle d'accès discret (31) et un contrôle d'accès configurable librement (35), qui fournit l'interface (37) en vue du couplage au module de sécurité (11),
- chacun des processus (25a,25b) est exécuté dans un ou plusieurs conteneurs (27a,27b) et est coordonné à ces derniers de telle sorte que chaque conteneur (27a,27b) isole le ou les processus coordonnés (25a,25b), et
- une implémentation spécifique au conteneur de l'interface (37) est fournie, dans laquelle l'interface (37) présente plusieurs modules (38a,38b), qui fournissent respectivement une configuration spécifique au conteneur, moyennant quoi les configurations spécifiques aux conteneurs sont différentes et sont respectivement coordonnées à un des conteneurs (27a,27b).

2. Dispositif selon la revendication 1, dans lequel l'une ou les plusieurs autorisations sont configurées, en ce que le système d'exploitation déclenche l'une ou les plusieurs autorisations par l'intermédiaire du module de sécurité (11).

3. Dispositif selon la revendication 1 ou 2, dans lequel l'une ou les plusieurs autorisations sont configurées, en ce que le système d'exploitation charge une ou plusieurs autorisations sur la base des informations du module de sécurité (11).

4. Dispositif selon une des revendications précédentes, dans lequel l'une ou les plusieurs autorisations sont configurées dynamiquement au moment de l'exécution.

5. Dispositif selon une des revendications précédentes, dans lequel le module de contrôle d'accès est configuré afin de classifier des appels de ressources et en réaction à une classification d'un appel de ressources comme appel critique, intervenir sur le module de sécurité (11) lors de la surveillance de l'appel de ressources.

6. Dispositif selon une des revendications précédentes, dans lequel le module de contrôle d'accès intervient sur des groupes d'autorisations dans lequel chaque groupe d'autorisations est coordonné à un conteneur (27a,27b).

7. Dispositif selon une des revendications précédentes, dans lequel chaque conteneur (27a,27b) est conçu afin de mémoriser de manière persistante les données des processus coordonnés (25a,25b), dans lequel les données sont cryptées et peuvent être décryptées par l'intermédiaire du module de sécurité (11).

8. Système, présentant au moins un dispositif (3,3a,...,3n) selon une des revendications précédentes.

9. Système selon la revendication 8, présentant au moins une instance (9) d'un tiers de confiance, qui fournit une infrastructure de clé publique.

10. Procédé de surveillance sécurisée de processus, qui présente les étapes suivantes :
- exécuter un système d'exploitation et des processus (25a,25b) sur le système d'exploitation, dans lequel chacun des processus (25a,25b) est exécuté dans des conteneurs (27a,27b) et est coordonnée à ces derniers de telle sorte que chaque conteneur (27a,27b) isole le ou les processus (25a,25b),
- déterminer (47) si un module de sécurité (11) est couplé,
- surveiller (67) un accès à des appels de processus (25a,25b) sur la base d'une ou plusieurs autorisations (53), au moyen du module de sécurité (11) sont configurées (55), par un module de contrôle d'accès du système d'exploitation, dans lequel
- le module de contrôle d'accès est formé avec un contrôle d'accès discret (31) et un contrôle d'accès configurable librement (35), qui fournit une interface (37), qui sert à coupler le module de sécurité (11), et
- une implémentation spécifique au conteneur de l'interface (37) est fourni, dans laquelle l'interface (37) présente plusieurs modules (38a,38b), qui fournissent respectivement une configuration spécifique au conteneur, dans lequel les configurations spécifiques au conteneur sont différentes et sont respectivement coordonnées à des un des conteneurs (27a,27b).

11. Procédé selon la revendication 10, dans lequel la configuration (55) comprend un déclenchement de l'une ou les plusieurs autorisations (53) par l'intermédiaire du module de sécurité (11).

12. Procédé selon la revendication 10 ou 11, dans lequel la configuration (55) comprend le chargement de l'une ou les plusieurs autorisations (53) sur la base des informations du module de sécurité (11).

13. Procédé selon une des revendications 10 à 12, dans lequel l'une ou les plusieurs autorisations (53) sont configurées dynamiquement au moment de l'exécution.

14. Procédé selon une des revendications 11 à 13, qui comprend en outre une authentification d'un utilisateur par le module de sécurité (11), dans lequel une ou plusieurs autorisations (53) sont configurées après une authentification réussie de l'utilisateur.
